# EUROPEAN PATENT SPECIFICATION

(11) **EP 2 649 774 B1**
(45) Date of publication and mention of the grant of the patent: **20.08.2014**
(21) Application number: 11801935.5
(22) Date of filing: 08.12.2011
(51) Int. Cl.: H04W 4/18, H04L 12/26

(54) **COORDINATE SHARING BETWEEN USER EQUIPMENTS DURING A GROUP COMMUNICATION SESSION IN A WIRELESS COMMUNICATIONS SYSTEM**
KORDINATENAUSTAUSCH ZWISCHEN ENDGERÄTEN VON TEILNEHMERN AN EINE GRUPPENSITZUNG IN EINEM DRAHTLOSEN NETZWERK
PARTAGE DE COORDONÉES ENTRE TERMINAUX D'UTILISATEURS PENDANT UNE SESSION DE GROUPE DANS UN RÉSEAU DE COMMUNICATION SANS FIL

(30) Priority: 08.12.2010 US 421046 P; 23.11.2011 US 201113303657
(43) Date of publication of application: 16.10.2013
(60) Divisional application: 14174853.3
(73) Proprietor: Qualcomm Incorporated, San Diego, CA 92121 (US)
(72) Inventor: DEWING, Shane, San Diego, California 92121 (US); STONEFIELD, Anthony, San Diego, California 92121 (US); GILL, Harleen, San Diego, California 92121 (US); LINDNER, Mark, San Diego, California 92121 (US); LAPKIN, Michael, San Diego, California 92121 (US)
(74) Representative: Catesby, Olivia Joanne
(86) International application number: PCT/US2011/063960
(87) International publication number: WO 2012/078883

(56) References cited:
- EP-A1- 2 172 855
- EP-A2- 0 837 588
- WO-A1-2011/085030
- WO-A2-01/69848
- US-A1- 2004 203 677
- US-A1- 2005 233 736
- US-A1- 2005 288 036
- US-A1- 2006 031 290
- US-A1- 2006 223 518
- US-A1- 2010 248 742
- US-B1- 6 343 313

## Description

### BACKGROUND

### 1. Field of the Invention

Embodiments of the invention relate to coordinate sharing between user equipments (UEs) during a group communication sessions in a wireless communications system.

### 2. Relevant Background

Wireless communication systems have developed through various generations, including a first-generation analog wireless phone service (1G), a second-generation (2G) digital wireless phone service (including interim 2.5G and 2.75G networks) and a third-generation (3G) high speed data / Internet-capable wireless service. There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Orthogonal FDMA (OFDMA), Time Division Multiple Access (TDMA), the Global System for Mobile access (GSM) variation of TDMA, and newer hybrid digital communication systems using both TDMA and CDMA technologies.

The method for providing CDMA mobile communications was standardized in the United States by the Telecommunications Industry Association/Electronic Industries Association in TIA/EIA/IS-95-A entitled "Mobile Station-Base Station Compatibility Standard for Dual-Mode Wideband Spread Spectrum Cellular System," referred to herein as IS-95. Combined AMPS & CDMA systems are described in TIA/EIA Standard IS-98. Other communications systems are described in the IMT-2000/UM, or International Mobile Telecommunications System 2000/Universal Mobile Telecommunications System, standards covering what are referred to as wideband CDMA (W-CDMA), CDMA2000 (such as CDMA2000 1xEV-DO standards, for example) or TD-SCDMA.

In W-CDMA wireless communication systems, user equipments (UEs) receive signals from fixed position Node Bs (also referred to as cell sites or cells) that support communication links or service within particular geographic regions adjacent to or surrounding the base stations. Node Bs provide entry points to an access network (AN) / radio access network (RAN), which is generally a packet data network using standard Internet Engineering Task Force (IETF) based protocols that support methods for differentiating traffic based on Quality of Service (QoS) requirements. Therefore, the Node Bs generally interacts with UEs through an over the air interface and with the RAN through Internet Protocol (IP) network data packets.

US2006223518 discloses a system for exchanging GPS or other position data between wireless devices for purposes of group activities, child location monitoring, work group coordination, dispatching of employees etc. Cell phones and other wireless devices with GPS receivers have loaded therein a Buddy Watch application and a TalkControl application. The Buddy Watch application communicates with the GPS receiver and other wireless devices operated by buddies registered in the users phone as part of buddy groups or individually. GPS position data and historical GPS position data can be exchanged between cell phones of buddies and instant buddies such as tow truck drivers via a buddy watch server. Emergency monitoring services can be set up with notifications to programmable individuals in case an individual does not respond. Positions and tracks can be displayed. TalkControl simplifies and automates the process of joining talk groups for walkie talkie services such as that provided by Nextel.

US2005288036 discloses a system and method for sharing geographical location information among a set of wireless telecommunication devices, such as mobile telephones. A first wireless telecommunication device generates geographical location information of that wireless telecommunication device, either through a resident device such as a GPS device, or has another computer device on the network provide the geographic location information, and then shares the geographical location information through sending the location information to one or more servers for relay to a predesignated target set of wireless telecommunication devices. The server stores the identity of member devices of the target set and controls communication between the first wireless telecommunications device and the member devices of the target set. A second server can be used to modify the geographical information, such as providing a map showing the location of the first wireless telecommunication device and other member devices of the target set.

EP2172855 discloses an apparatus for providing relevance indication which may include a processor. The processor may be configured to identify tags associated with a place. In this regard, the place may be a virtual location where information is shared. The processor may be configured to determine a relevance value for the place by analyzing the tags relative to user attributes. The processor may also be configured to provide for an output of a representation of the relevance value to a user interface. Associated methods and computer program products are also disclosed.

### SUMMARY

In accordance with the present invention and as set out in the appended claims, a user equipment (UE) participates in a coordinate-sharing communication session with at least one other UE that is arbitrated by a server (e.g., another UE participating in the session or an independent server). The UE displays a given visual representation of media content associated with the coordinate-sharing communication session. In an embodiment, the UE receives user input that indicates a selection of at least one coordinate of the given visual representation, and reports the coordinate selection(s) to the server via a coordinate packet. During the coordinate-sharing communication session, the server monitors for coordinate packets from the participating UEs and formats coordinate output frames indicative of selected coordinates at the respective UEs. In another embodiment, the UE receives a coordinate output frame indicate of coordinate selection(s) at the at least one other UE and selectively updates its given visual representation accordingly.

### BRIEF DESCRIPTION OF THE DRAWINGS

A more complete appreciation of embodiments of the invention and many of the attendant advantages thereof will be readily obtained as the same becomes better understood by reference to the following detailed description when considered in connection with the accompanying drawings which are presented solely for illustration and not limitation of the invention, and in which:
FIG. 1 is a diagram of a wireless network architecture that supports user equipments and radio access networks in accordance with at least one embodiment of the invention.
FIG. 2A illustrates the core network of FIG. 1 according to an embodiment of the present invention.
FIG. 2B illustrates an example of the wireless communications system of FIG. 1 in more detail.
FIG. 3 is an illustration of user equipment in accordance with at least one embodiment of the invention.
FIG. 4A illustrates a process of setting up a server-arbitrated group communication session between a plurality of user equipments (UEs) whereby coordinate information indicative of points of interest is shared among the plurality of UEs in accordance with an embodiment of the invention.
FIG. 4B illustrates a continuation of the process of FIG. 4A in accordance with an embodiment of the invention.
FIG. 5A illustrates an example of the user input that can be received from during the process of FIG. 4A in accordance with an embodiment of the invention.
FIG. 5B illustrates an example of updated visual representations on displays of the plurality of UEs based on the user input from FIG. 5A in accordance with an embodiment of the invention.
FIG. 5C illustrates an example of the user input that can be received from during the process of FIG. 4B in accordance with an embodiment of the invention.
FIG. 5D illustrates an example of updated visual representations on displays of the plurality of UEs based on the user input from FIG. 5C in accordance with an embodiment of the invention.
FIG. 6 illustrates operation of an application server during the processes of FIGS. 4A and/or 4B in accordance with an embodiment of the invention.
FIG. 7A illustrates a more detailed implementation example of the process of FIG. 6 in accordance with an embodiment of the invention.
FIG. 7B illustrates a more detailed implementation example of the process of FIG. 6 in accordance with another embodiment of the invention.
FIG. 7C illustrates a more detailed implementation example of the process of FIG. 6 in accordance with yet another embodiment of the invention.
FIG. 8 illustrates a more detailed implementation of a portion of the process of FIG. 6 in accordance with an embodiment of the invention.
FIGS. 9A through each 10B illustrate examples of data manipulation that can occur during the process of FIG. 8 in accordance with an embodiment of the invention.
FIG. 11A illustrates a process of replaying an archived group communication session in accordance with an embodiment of the invention.
FIG. 11B illustrates a process of replaying a portion of an active group communication session in catch-up mode in accordance with an embodiment of the invention.
FIG. 12 illustrates a communication device that includes logic configured to perform functionality in accordance with an embodiment of the invention.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The words "exemplary" and/or "example" are used herein to mean "serving as an example, instance, or illustration." Any embodiment described herein as "exemplary" and/or "example" is not necessarily to be construed as preferred or advantageous over other embodiments. Likewise, the term "embodiments of the invention" does not require that all embodiments of the invention include the discussed feature, advantage or mode of operation.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

A High Data Rate (HDR) subscriber station, referred to herein as user equipment (UE), may be mobile or stationary, and may communicate with one or more access points (APs), which may be referred to as Node Bs. A UE transmits and receives data packets through one or more of the Node Bs to a Radio Network Controller (RNC). The Node Bs and RNC are parts of a network called a radio access network (RAN). A radio access network can transport voice and data packets between multiple UEs.

The radio access network may be further connected to additional networks outside the radio access network, such core network including specific carrier related servers and devices and connectivity to other networks such as a corporate intranet, the Internet, public switched telephone network (PSTN), a Serving General Packet Radio Services (GPRS) Support Node (SGSN), a Gateway GPRS Support Node (GGSN), and may transport voice and data packets between each UE and such networks. A UE that has established an active traffic channel connection with one or more Node Bs may be referred to as an active UE, and can be referred to as being in a traffic state. A UE that is in the process of establishing an active traffic channel (TCH) connection with one or more Node Bs can be referred to as being in a connection setup state. A UE may be any data device that communicates through a wireless channel or through a wired channel. A UE may further be any of a number of types of devices including but not limited to PC card, compact flash device, external or internal modem, or wireless or wireline phone. The communication link through which the UE sends signals to the Node B(s) is called an uplink channel (e.g., a reverse traffic channel, a control channel, an access channel, etc.). The communication link through which Node B(s) send signals to a UE is called a downlink channel (e.g., a paging channel, a control channel, a broadcast channel, a forward traffic channel, etc.). As used herein the term traffic channel (TCH) can refer to either an uplink / reverse or downlink/forward traffic channel.

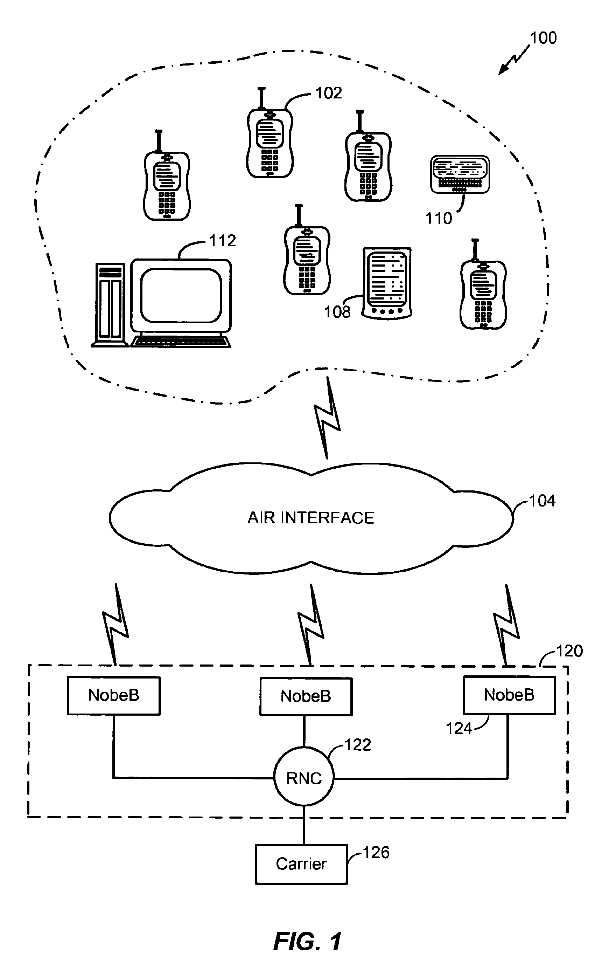

FIG. 1 illustrates a block diagram of one exemplary embodiment of a wireless communications system 100 in accordance with at least one embodiment of the invention. System 100 can contain UEs, such as cellular telephone 102, in communication across an air interface 104 with an access network or radio access network (RAN) 120 that can connect the access terminal 102 to network equipment providing data connectivity between a packet switched data network (e.g., an intranet, the Internet, and/or core network 126) and the UEs 102, 108, 110, 112. As shown here, the UE can be a cellular telephone 102, a personal digital assistant 108, a pager 110, which is shown here as a two-way text pager, or even a separate computer platform 112 that has a wireless communication portal. Embodiments of the invention can thus be realized on any form of access terminal including a wireless communication portal or having wireless communication capabilities, including without limitation, wireless modems, PCMCIA cards, personal computers, telephones, or any combination or subcombination thereof. Further, as used herein, the term "UE" in other communication protocols (i.e., other than W-CDMA) may be referred to interchangeably as an "access terminal" "AT", "wireless device", "client device", "mobile terminal", "mobile station" and variations thereof.

Referring back to FIG. 1, the components of the wireless communications system 100 and interrelation of the elements of the exemplary embodiments of the invention are not limited to the configuration illustrated. System 100 is merely exemplary and can include any system that allows remote UEs, such as wireless client computing devices 102, 108, 110, 112 to communicate over-the-air between and among each other and/or between and among components connected via the air interface 104 and RAN 120, including, without limitation, core network 126, the Internet, PSTN, SGSN, GGSN and/or other remote servers.

The RAN 120 controls messages (typically sent as data packets) sent to a RNC 122. The RNC 122 is responsible for signaling, establishing, and tearing down bearer channels (i.e., data channels) between a Serving General Packet Radio Services (GPRS) Support Node (SGSN) and the UEs 102/108/110/112. If link layer encryption is enabled, the RNC 122 also encrypts the content before forwarding it over the air interface 104. The function of the RNC 122 is well-known in the art and will not be discussed further for the sake of brevity. The core network 126 may communicate with the RNC 122 by a network, the Internet and/or a public switched telephone network (PSTN). Alternatively, the RNC 122 may connect directly to the Internet or external network. Typically, the network or Internet connection between the core network 126 and the RNC 122 transfers data, and the PSTN transfers voice information. The RNC 122 can be connected to multiple Node Bs 124. In a similar manner to the core network 126, the RNC 122 is typically connected to the Node Bs 124 by a network, the Internet and/or PSTN for data transfer and/or voice information. The Node Bs 124 can broadcast data messages wirelessly to the UEs, such as cellular telephone 102. The Node Bs 124, RNC 122 and other components may form the RAN 120, as is known in the art. However, alternate configurations may also be used and the invention is not limited to the configuration illustrated. For example, in another embodiment the functionality of the RNC 122 and one or more of the Node Bs 124 may be collapsed into a single "hybrid" module having the functionality of both the RNC 122 and the Node B(s) 124.

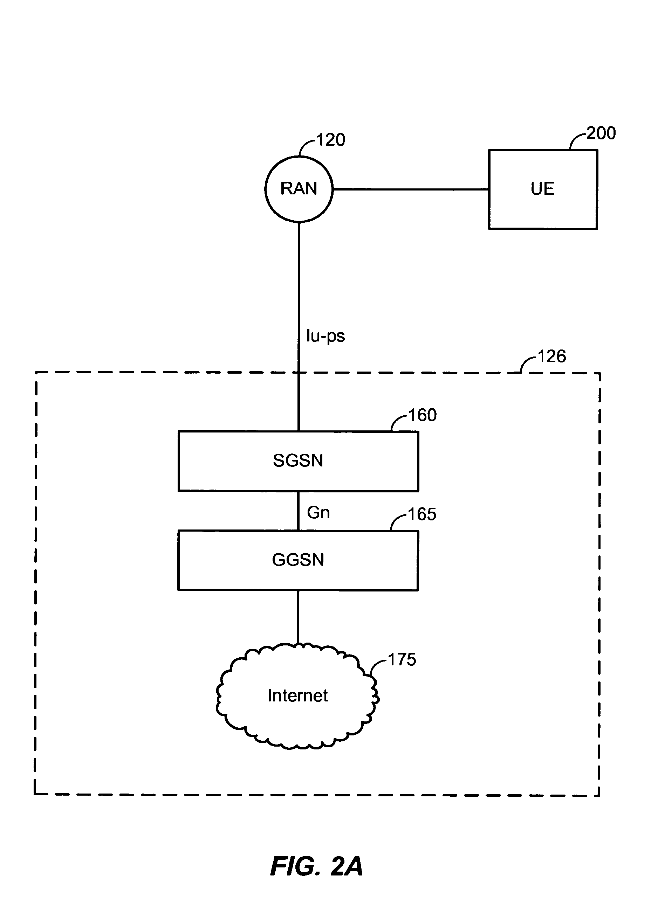

FIG. 2A illustrates the core network 126 according to an embodiment of the present invention. In particular, FIG. 2A illustrates components of a General Packet Radio Services (GPRS) core network implemented within a W-CDMA system. In the embodiment of FIG. 2A, the core network 126 includes a Serving GPRS Support Node (SGSN) 160, a Gateway GPRS Support Node (GGSN) 165 and an Internet 175. However, it is appreciated that portions of the Internet 175 and/or other components may be located outside the core network in alternative embodiments.

Generally, GPRS is a protocol used by Global System for Mobile communications (GSM) phones for transmitting Internet Protocol (IP) packets. The GPRS Core Network (e.g., the GGSN 165 and one or more SGSNs 160) is the centralized part of the GPRS system and also provides support for W-CDMA based 3G networks. The GPRS core network is an integrated part of the GSM core network, provides mobility management, session management and transport for IP packet services in GSM and W-CDMA networks.

The GPRS Tunneling Protocol (GTP) is the defining IP protocol of the GPRS core network. The GTP is the protocol which allows end users (e.g., access terminals) of a GSM or W-CDMA network to move from place to place while continuing to connect to the internet as if from one location at the GGSN 165. This is achieved transferring the subscriber's data from the subscriber's current SSGN 160 to the GGSN 165, which is handling the subscriber's session.

Three forms of GTP are used by the GPRS core network; namely, (i) GTP-U, (ii) GTP-C and (iii) GTP' (GTP Prime). GTP-U is used for transfer of user data in separated tunnels for each packet data protocol (PDP) context. GTP-C is used for control signaling (e.g., setup and deletion of PDP contexts, verification of GSN reach-ability, updates or modifications such as when a subscriber moves from one SGSN to another, etc.). GTP' is used for transfer of charging data from GSNs to a charging function.

Referring to FIG. 2A, the GGSN 165 acts as an interface between the GPRS backbone network (not shown) and the external packet data network 175. The GGSN 165 extracts the packet data with associated packet data protocol (PDP) format (e.g., IP or PPP) from the GPRS packets coming from the SGSN 160, and sends the packets out on a corresponding packet data network. In the other direction, the incoming data packets are directed by the GGSN 165 to the SGSN 160 which manages and controls the Radio Access Bearer (RAB) of the destination UE served by the RAN 120. Thereby, the GGSN 165 stores the current SGSN address of the target UE and his/her profile in its location register (e.g., within a PDP context). The GGSN is responsible for IP address assignment and is the default router for the connected UE. The GGSN also performs authentication and charging functions.

The SGSN 160 is representative of one of many SGSNs within the core network 126, in an example. Each SGSN is responsible for the delivery of data packets from and to the UEs within an associated geographical service area. The tasks of the SGSN 160 includes packet routing and transfer, mobility management (e.g., attach/detach and location management), logical link management, and authentication and charging functions. The location register of the SGSN stores location information (e.g., current cell, current VLR) and user profiles (e.g., IMSI, PDP address(es) used in the packet data network) of all GPRS users registered with the SGSN 160, for example, within one or more PDP contexts for each user or UE. Thus, SGSNs are responsible for (i) de-tunneling downlink GTP packets from the GGSN 165, (ii) uplink tunnel IP packets toward the GGSN 165, (iii) carrying out mobility management as UEs move between SGSN service areas and (iv) billing mobile subscribers. As will be appreciated by one of ordinary skill in the art, aside from (i) - (iv), SGSNs configured for GSM/EDGE networks have slightly different functionality as compared to SGSNs configured for W-CDMA networks.

The RAN 120 (e.g., or UTRAN, in Universal Mobile Telecommunications System (UMTS) system architecture) communicates with the SGSN 160 via a Iu interface, with a transmission protocol such as Frame Relay or IP. The SGSN 160 communicates with the GGSN 165 via a Gn interface, which is an IP-based interface between SGSN 160 and other SGSNs (not shown) and internal GGSNs, and uses the GTP protocol defined above (e.g., GTP-U, GTP-C, GTP', etc.). While not shown in FIG. 2A, the Gn interface is also used by the Domain Name System (DNS). The GGSN 165 is connected to a Public Data Network (PDN) (not shown), and in turn to the Internet 175, via a Gi interface with IP protocols either directly or through a Wireless Application Protocol (WAP) gateway.

The PDP context is a data structure present on both the SGSN 160 and the GGSN 165 which contains a particular UE's communication session information when the UE has an active GPRS session. When a UE wishes to initiate a GPRS communication session, the UE must first attach to the SGSN 160 and then activate a PDP context with the GGSN 165. This allocates a PDP context data structure in the SGSN 160 that the subscriber is currently visiting and the GGSN 165 serving the UE's access point.

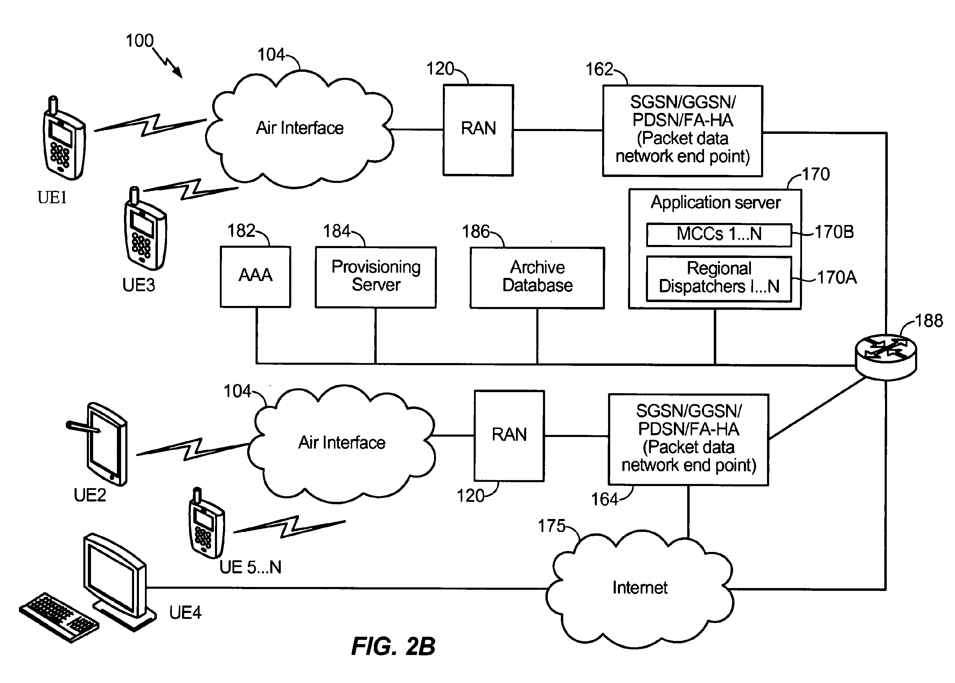

FIG. 2B illustrates an example of the wireless communications system 100 of FIG. 1 in more detail. In particular, referring to FIG. 2B, UEs 1...N are shown as connecting to the RAN 120 at locations serviced by different packet data network endpoints. The illustration of FIG. 2B is specific to W-CDMA systems and terminology, although it will be appreciated how FIG. 2B could be modified to confirm with a 1x EV-DO system. Accordingly, UEs 1 and 3 connect to the RAN 120 at a portion served by a first packet data network end-point 162 (e.g., which may correspond to SGSN, GGSN, PDSN, a home agent (HA), a foreign agent (FA), etc.). The first packet data network end-point 162 in turn connects, via the routing unit 188, to the Internet 175 and/or to one or more of an authentication, authorization and accounting (AAA) server 182, a provisioning server 184, an archive database 186 and/or the application server 170. UEs 2 and 5...N connect to the RAN 120 at a portion served by a second packet data network end-point 164 (e.g., which may correspond to SGSN, GGSN, PDSN, FA, HA, etc.). Similar to the first packet data network end-point 162, the second packet data network end-point 164 in turn connects, via the routing unit 188, to the Internet 175 and/or to one or more of the AAA server 182, a provisioning server 184, the archive database 186 and/or the application server 170. UE 4 connects directly to the Internet 175, and through the Internet 175 can then connect to any of the system components described above.

Referring to FIG. 2B, UEs 1, 3 and 5...N are illustrated as wireless cell-phones, UE 2 is illustrated as a wireless tablet-PC and UE 4 is illustrated as a wired desktop station. However, in other embodiments, it will be appreciated that the wireless communication system 100 can connect to any type of UE, and the examples illustrated in FIG. 2B are not intended to limit the types of UEs that may be implemented within the system. Also, while the AAA 182, the provisioning server 184, the archive database 186 and the application server 170 are each illustrated as structurally separate servers, one or more of these servers may be consolidated in at least one embodiment of the invention.

Further, referring to FIG. 2B, the application server 170 is illustrated as including a plurality of media control complexes (MCCs) 1...N 170B, and a plurality of regional dispatchers 1...N 170A. Collectively, the regional dispatchers 170A and MCCs 170B are included within the application server 170, which in at least one embodiment can correspond to a distributed network of servers that collectively functions to arbitrate communication sessions (e.g., half-duplex group communication sessions via IP unicasting and/or IP multicasting protocols) within the wireless communication system 100. For example, because the communication sessions arbitrated by the application server 170 can theoretically take place between UEs located anywhere within the system 100, multiple regional dispatchers 170A and MCCs are distributed to reduce latency for the arbitrated communication sessions (e.g., so that a MCC in North America is not relaying media back-and-forth between session participants located in China). Thus, when reference is made to the application server 170, it will be appreciated that the associated functionality can be enforced by one or more of the regional dispatchers 170A and/or one or more of the MCCs 170B. The regional dispatchers 170A are generally responsible for any functionality related to establishing a communication session (e.g., handling signaling messages between the UEs, scheduling and/or sending announce messages, etc.), whereas the MCCs 170B are responsible for hosting the communication session for the duration of the call instance, including conducting an in-call signaling and an actual exchange of media during an arbitrated communication session.

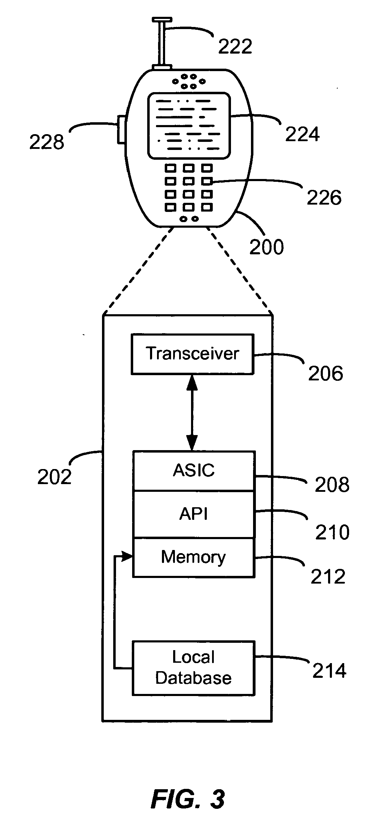

Referring to FIG. 3, a UE 200, (here a wireless device), such as a cellular telephone, has a platform 202 that can receive and execute software applications, data and/or commands transmitted from the RAN 120 that may ultimately come from the core network 126, the Internet and/or other remote servers and networks. The platform 202 can include a transceiver 206 operably coupled to an application specific integrated circuit (ASIC) 208, or other processor, microprocessor, logic circuit, or other data processing device. The ASIC 208 or other processor executes the application programming interface (API) 210 layer that interfaces with any resident programs in the memory 212 of the wireless device. The memory 212 can be comprised of read-only or random-access memory (RAM and ROM), EEPROM, flash cards, or any memory common to computer platforms. The platform 202 also can include a local database 214 that can hold applications not actively used in memory 212. The local database 214 is typically a flash memory cell, but can be any secondary storage device as known in the art, such as magnetic media, EEPROM, optical media, tape, soft or hard disk, or the like. The internal platform 202 components can also be operably coupled to external devices such as antenna 222, display 224, push-to-talk button 228 and keypad 226 among other components, as is known in the art.

Accordingly, an embodiment of the invention can include a UE including the ability to perform the functions described herein. As will be appreciated by those skilled in the art, the various logic elements can be embodied in discrete elements, software modules executed on a processor or any combination of software and hardware to achieve the functionality disclosed herein. For example, ASIC 208, memory 212, API 210 and local database 214 may all be used cooperatively to load, store and execute the various functions disclosed herein and thus the logic to perform these functions may be distributed over various elements. Alternatively, the functionality could be incorporated into one discrete component. Therefore, the features of the UE 200 in FIG. 3 are to be considered merely illustrative and the invention is not limited to the illustrated features or arrangement.

The wireless communication between the UE 102 or 200 and the RAN 120 can be based on different technologies, such as code division multiple access (CDMA), W-CDMA, time division multiple access (TDMA), frequency division multiple access (FDMA), Orthogonal Frequency Division Multiplexing (OFDM), the Global System for Mobile Communications (GSM), or other protocols that may be used in a wireless communications network or a data communications network. For example, in W-CDMA, the data communication is typically between the client device 102, Node B(s) 124, and the RNC 122. The RNC 122 can be connected to multiple data networks such as the core network 126, PSTN, the Internet, a virtual private network, a SGSN, a GGSN and the like, thus allowing the UE 102 or 200 access to a broader communication network. As discussed in the foregoing and known in the art, voice transmission and/or data can be transmitted to the UEs from the RAN using a variety of networks and configurations. Accordingly, the illustrations provided herein are not intended to limit the embodiments of the invention and are merely to aid in the description of aspects of embodiments of the invention.

Below, embodiments of the invention are generally described in accordance with W-CDMA protocols and associated terminology (e.g., such as UE instead of mobile station (MS), mobile unit (MU), access terminal (AT), etc., RNC, contrasted with BSC in EV-DO, or Node B, contrasted with BS or MPT/BS in EV-DO, etc.). However, it will be readily appreciated by one of ordinary skill in the art how the embodiments of the invention can be applied in conjunction with wireless communication protocols other than W-CDMA.

Embodiments of the invention are directed to a sharing of coordinate information between a plurality of UEs during a group communication session. As will be described below in more detail, as a given user interacts with his/her UE, the UE determines at least one particular point of interest for the given user on a display of the UE. For example, the particular point of interest can correspond to a location on a touchscreen display of the UE that is being touched by a finger of the given user. In another example, a plurality of particular points of interest can be detected by the UE if the given user is touching the touchscreen display at multiple locations (e.g., 'multi-touch'). In another example, the particular point of interest can correspond to a location on the display of the UE where the UE has moved and/or clicked a cursor (e.g., via a mouse or touchpad interface). In another example, the particular point of interest can be based on a combination of the user touching a display of the UE in conjunction with moving the position at which the user is touching the display (e.g., 'touch and drag').

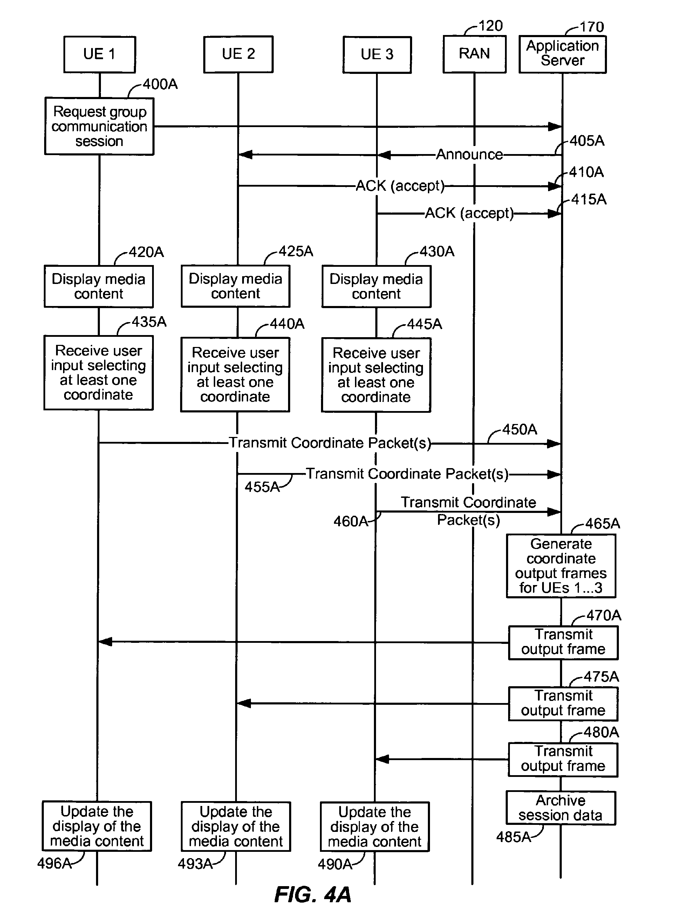

FIG. 4A illustrates a process of setting up a server-arbitrated group communication session between a plurality of UEs whereby coordinate information indicative of points of interest is shared among the plurality of UEs in accordance with an embodiment of the invention.

Referring to FIG. 4A, assume a given UE ("UE 1") determines to initiate a coordinate-sharing group communication session with a given communication group including at least UEs 2 and 3. Accordingly, UE 1 transmits a request to initiate the group communication session to the application server 170 via the RAN 120, 400A. In an example, the session initiation request of 400A can be associated with media content that will be displayed in some manner at each of the UEs participating in the group communication session. For example, the session initiation request can designate a particular map to be displayed during the group communication session, or a particular video game that is associated with various media content (e.g., such as a plurality of levels or 'dungeons', etc.).

The application server 170 receives the session initiation request from UE 1, identifies and locates the target UEs (i.e., UEs 2 and 3) that belong to the given communication group and then announces the group communication session to the given communication group, 405A. In the embodiment of FIG. 4A, assume that both UEs 2 and 3 receive the announcement message from the application server 170 and determine to accept the announced group communication session, such that UEs 2 and 3 send acknowledgment (ACK) messages indicating acceptance to the application server 170, 410A and 415A.

At this point, the application server 170 instructs UEs 1...3 that the group communication session can begin, and each of UEs 1...3 displays a given visual representation of media content that the users of UEs 1...3 will interact with during the group communication session, 420A, 425A and 430A. For example, the media content can correspond to a map, and a given version of the map can be displayed on each of UEs 1...3. However, in the case of a map, different maps and/or different representations of the same map can be displayed at the respective UEs. For example, if UE 1's display is capable of a higher-resolution than UE 2's display, the map may be displayed in the highest practical resolution at each of the respective UEs. In another example, the group communication session can correspond to some type of gaming session, and the media content can correspond to a 'level' of the game. In this case, the level may look substantially the same at the respective UEs, but there may also be subtle differences such as the user of a particular UE will have his/her score more prominently displayed than the other users' scores, and so on.

In another example, UE 1 can 'push' the media content (e.g., longitude and latitude information by which a map can be generated by Google, Bing, Mapquest or Navteq, etc.) from the given UE to the other participating UEs. In a further example, the media content can be associated with a modality that is selected by the user of UE 1 and is overlaid on top of the visual representation of the media content. For example, the modality can correspond to an arrangement of selectable touch-points (or coordinates) that can be selected and then shared between the participating UEs of the group communication session. It will be appreciated that the modality associated with the media content can change during the group communication session based on input from UE 1 and/or one of the other UEs. Further, one or more of the touch-points can be selectively enabled or disabled by UE 1 (or another UE) so that different touch-points (or coordinates) are available for selection by the participating UEs at different times during the group communication session.

In an alternative embodiment, the group communication session of FIG. 4A can be invoked when the user of UE 1 pushes a PLAN button (e.g., a button configured to invoke an event, such as a travel event whereby a group of users coordinate a voyage between two or more locations) that is associated, for example, with one or more of a route map (e.g., annotated with voice notes, photos, links and/or geo-fences or beacons) that is embodied within a calendar event (e.g., will start between 8:50AM and 9:00AM Pacific on Saturday, Dec. 4, 2010) from UE 1. In this case, the PLAN (and its associated information) can be conveyed from UE 1 to UEs 2...3 during set-up of the group communication session. UEs 2...3 can be provided with ACCEPT, DECLINE and MODIFY options. In FIG. 4A, it is assumed that UEs 2...3 simply accept the group communication session as configured by UE 1, but this need not always be the case and it will be appreciated that a session-negotiation procedure can occur before the conditions of the group communication session are finalized.

After accepting the PLAN, within the start window (e.g., 8:45-9AM), the originator/initiator (i.e., UE 1) can modify the PLAN or, when ready, can initiate the group communication session. In the example where the PLAN is some type of travel-event with an association route map, the group communication session can correspond to a real-time group session wherein participants' progress (e.g., passing check points) and actions (e.g., passive - stopping or speeding, and active - announcements) are tracked and broadcasted back to the group using a set of images, icons and audio elements. Wherein the event and PLAN utilizes maps and physical progress along a course, geo-beaconing and geo-fencing, as well as predetermined moments in time, can be used as triggers for individual or group alerts. During the session any participant can directly engage with any other participant or the whole group (e.g., via text message, voice note, call or media share). In that way, the host of the event can monitor the participants and communicate with individuals or all of them.

Further, while not shown explicitly in FIG. 4A, it will be appreciated that the media content that is displayed via an associated visual representation at UEs 1...3 in 420A, 425A and 430A in any number of ways. For example, the media content can be downloaded by one or more of UEs 1...3 during set-up of the group communication session shown in FIG. 4A. Alternatively, the media content can be pre-loaded at one or more of UEs 1...3, such that the group communication session can be set-up more quickly (since the media content need not be downloaded) and the application server 170 need only convey a reference or pointer associated with the pre-loaded content to UEs 1...3 during set-up of the group communication session. Alternatively, the media content can be exchanged in real-time between UEs 1...3 (e.g., a video conference), with the video feed being provided by one of UEs 1...3 or the application server 170 itself.

Thus, after 420A through 430A, a visual representation of the media content (e.g., a game level or background, a map, etc.) is being displayed at each of UEs 1...3. Next, each of UEs 1...3 receive user input, from their respective users, indicative of a selection of at least one coordinate of the visual representations on the displays at UEs 1...3, respectively, 435A, 440A and 445A. In an example, as soon as the user of UE 1 selects a SEND button on UE 1 and/or as soon as UEs 2...3 decide to join the group communication session, the logging of the coordinate selections of the respective UEs can begin. For example, the users of UEs 1...3 can each select (e.g., touch, click on, or point to) a particular point of the visual representation on their respective displays. In the case of a map, the users may select a particular building displayed on the map, for example. In the case of a game, the users may select points of interest on the visual representation, such as items, characters (e.g., Waldo's location in a 'Where's Waldo' game), etc.

In an example, the selected coordinates for UEs 1...3 can correspond to positions on their respective display screens. In another example, the selected coordinates for UEs 1...3 can correspond to positions within the portion of the display screen dedicated to the rendered or display visual representation of the media content on their respective display screens. Thus, if the visual representation of the media content on a particular UE is framed inside of a window, for instance, the selected coordinate may be relative to the framed window containing the visual representation.

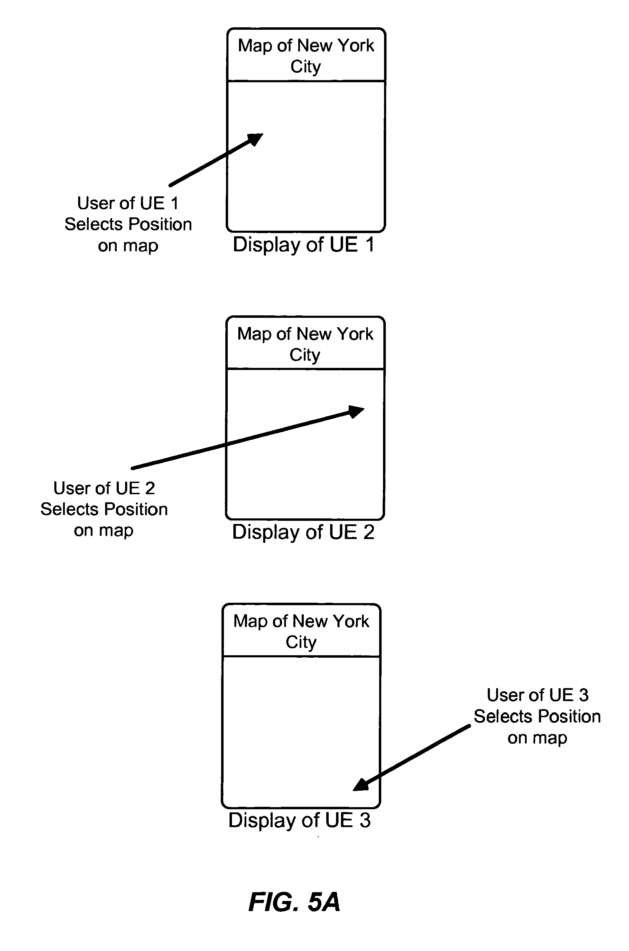

FIG. 5A illustrates an example of the user input that can be received from the users of UEs 1...3 during 435A, 440A and 445A in an example whereby the media content corresponds to a map of New York City. As shown in FIG. 5A, the user of UE 1 selects a position or coordinate on the left-central side of the map, the user of UE 2 selects a position or coordinate on the top-right side of the map and the user of UE 3 selects a position or coordinate on the bottom-right side of the map.

Alternatively, the selected coordinates in 435A through 445A of FIG. 4A can be the result of a translation operation at UEs 1...3. For example, if the media content corresponds to a map of New York City as in FIG. 5A, the displays at UEs 1...3 may be zoomed in on the map to different degrees. Next, assume that the users of UEs 1...3 each select the Empire State Building on their respective map. For the user of UE 1, this may mean that the left-side of the display is touched or selected, whereas for the user of UE 2, this may mean that the right-side of the display is touched or selected. In this case, irrespective of the position of the Empire State Building on the particular displays of the UEs, the UEs can map the users' selections to longitude/latitude coordinates.

After determining the selected coordinate(s) at each of UEs 1...3, UEs 1...3 each transmit the selected coordinate(s) to the application server 170 within one or more coordinate packets, 450A, 455A and 460A. Referring to FIGS. 450A through 460A of FIG. 4A, in addition to including the selected coordinate(s) (e.g., the position at which the selection occurred at UEs 1...3, respectively), the one or more coordinate packets transmitted at 450A, 455A and 460A can further include a set of presentation reconstruction parameters to permit or facilitate reconstruction of the user input or selection from 435A, 440A and 445A, respectively. For example, UEs 1...3 may each be presenting a map of New York City at different levels of zoom (i.e., different viewing areas) during the communication session. In this case, the set of presentation reconstruction parameters permit reconstruction of the user selection at the target UE(s) at the proper position relative to the map instead of merely at the corresponding screen position. In another example, UE 1 may detect that its coordinate selection can be presented at UE 2 with no changes but that its coordinate selection is outside of a viewing area of the given visual representation (e.g., the map, in this case) at UE 3 (e.g., based on feedback from the application server 170 and/or UE 3 related to UE 3's current viewing area). In response to this detection, the set of presentation reconstruction parameters can include a request for UE 3 to adjust or re-orient its viewing area of the map to permit presentation ofUE 1's selected coordinate.

Still referring to FIGS. 450A through 460A of FIG. 4A, in another example, UE 1 may be presenting video content full-screen and UE 2 may be presenting video content in a small portion of its screen display instead of full-screen. In this case, UE 2 may send presentation reconstruction parameters so that the selected coordinate is conveyed in conjunction with an indication of where the selected coordinate was positioned relative to the video content in the small portion. Thus, assume that the bottom-right portion of UE 2's screen is displaying video content associated with the communication session, and that the selected coordinate is on the upper-left side of the portion. In this case, when re-presented at the target UE(s), the presentation reconstruction parameters are able to instruct the target UE(s) to display the selected coordinate in their upper-left sections dedicated to the visual representation (instead of their bottom-right screen sections based on an absolute screen position from UE 2).

Still referring to FIGS. 450A through 460A of FIG. 4A, in another embodiment, one or more of these coordinate packet transmissions can be optional. For example, assume that UEs 1...3 each receive user input corresponding to at least one coordinate selection in 435A, 440A and 445A, respectively. However, assume that UE 1 determines that its coordinate selection conflicts with the presentation of the given visual representation at UE 2 and/or UE 3. For example, UE 1 may detect that its coordinate selection is outside of a viewing area of the given visual representation at UE 2 and/or UE 3. In this case, instead of packaging viewing area adjustment instructions into the set of presentation reconstruction parameters, UE 1 can simply refrain from sending its coordinate packet in response to the conflict detection. In another example, UE 1 may detect that its coordinate selection cannot be displayed at UEs 2 and/or 3 irrespective of their respective viewing areas (e.g., UEs 2 and/or 3 may no longer be presenting the given visual representation on their screens so the coordinate selection of UE 1 is not relevant, etc.). In this case, UE 1 can simply refrain from sending its coordinate packet in response to the conflict detection.

Still referring to FIGS. 450A through 460A of FIG. 4A, in another embodiment, one or more of the selected coordinates can be modified in response to a conflict detection. Thus, assume that UEs 1...3 each receive user input corresponding to at least one coordinate selection in 435A, 440A and 445A, respectively. However, assume that UE 1 determines that its coordinate selection conflicts with the presentation of the given visual representation at UE 2 and/or UE 3. For example, UE 1 may detect that its coordinate selection is outside of a viewing area of the given visual representation at UE 2 and/or UE 3. In this case, instead of packaging viewing area adjustment instructions into the set of presentation reconstruction parameters or avoiding transmission of the coordinate packet entirely, UE 1 can instead modify the coordinate selection. For example, if the user of UE 1 selected a coordinate position that is outside the viewing areas of UEs 2 and 3, the selected coordinate can be moved to a position that is within the viewing areas of UEs 2 and 3 (e.g., the user of UE 1 selects a position too far left to be displayed at UEs 2 and 3, and the modification corresponds to maintaining the vertical screen position of the coordinate while shifting the horizontal screen position further right so as to be just within range of the viewing areas of UEs 2 and/or 3).

Still referring to 450A through 460A of FIG. 4A, in another embodiment, the transmission of one or more of the coordinate packets between 450A through 460A can be transmitted in conjunction with a talk spurt. In this embodiment, the coordinate packets can be embedded within or piggy-backed onto a talk spurt packet to reduce a number of over the air (OTA) transmissions.

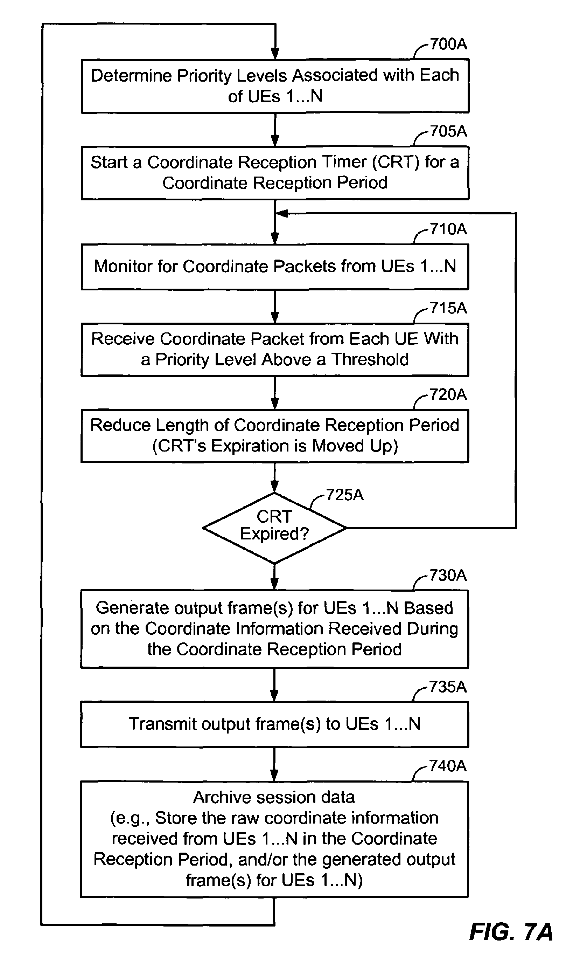

After the coordinate packet(s) are transmitted at 450A, 455A and 460A, the application server 170 receives the coordinate packets from UEs 1...3 within a given coordinate reception period, and generates output frame(s) for transmission to each of UEs 1...3, 465A. In an example, as noted above, the coordinate packet(s) may be received at the application server 170 in conjunction with a talk spurt. The operation of 465A is discussed in much greater detail below with respect to FIGS. 7A through 10B.

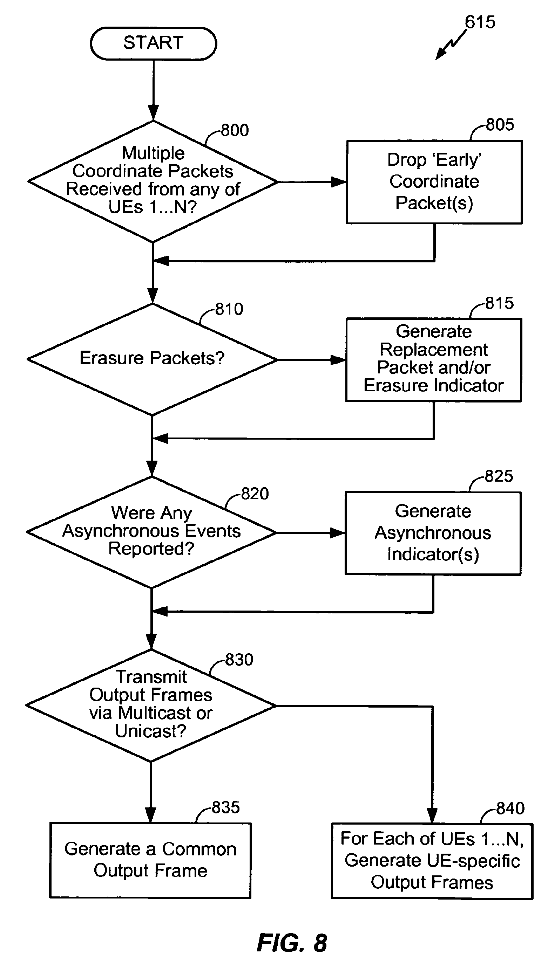

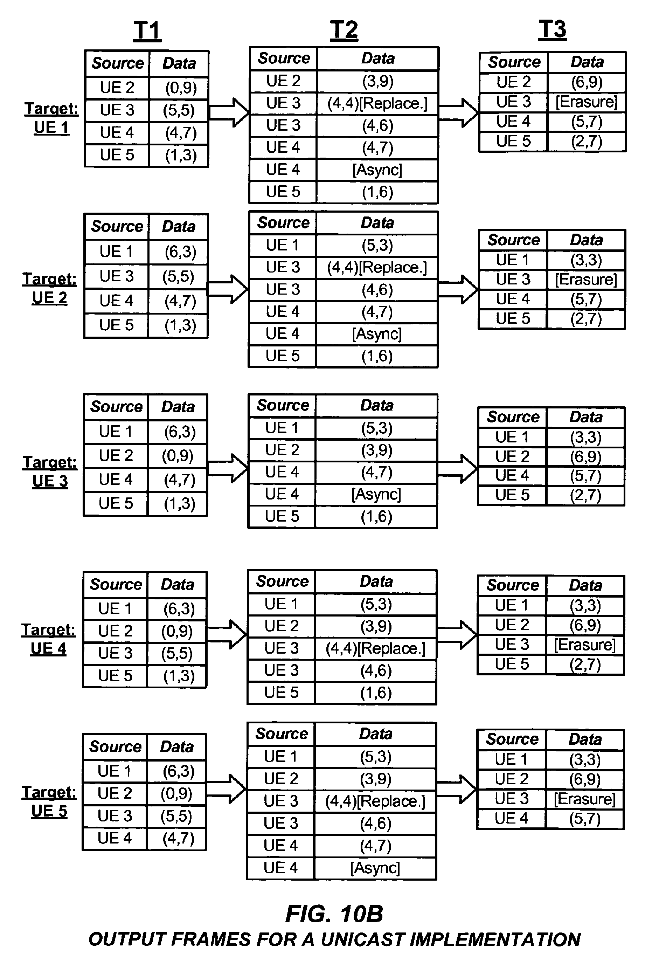

After generating the output frame(s) in 465A, the application server 170 transmits the generated output frame(s) to UEs 1...3 in 470A, 475A and 480A. While the transmission of the output frame(s) to UEs 1...3 is illustrated in FIG. 4A as being three separate transmissions consistent with IP unicasting protocols, it will be appreciated that these 'separate' transmissions can be consolidated in the event that the same, common output frame is transmitted to each of UEs 1...3 via IP multicasting or broadcasting protocols (e.g., this is discussed in more detail below with respect to FIG. 8 and FIG. 10B).

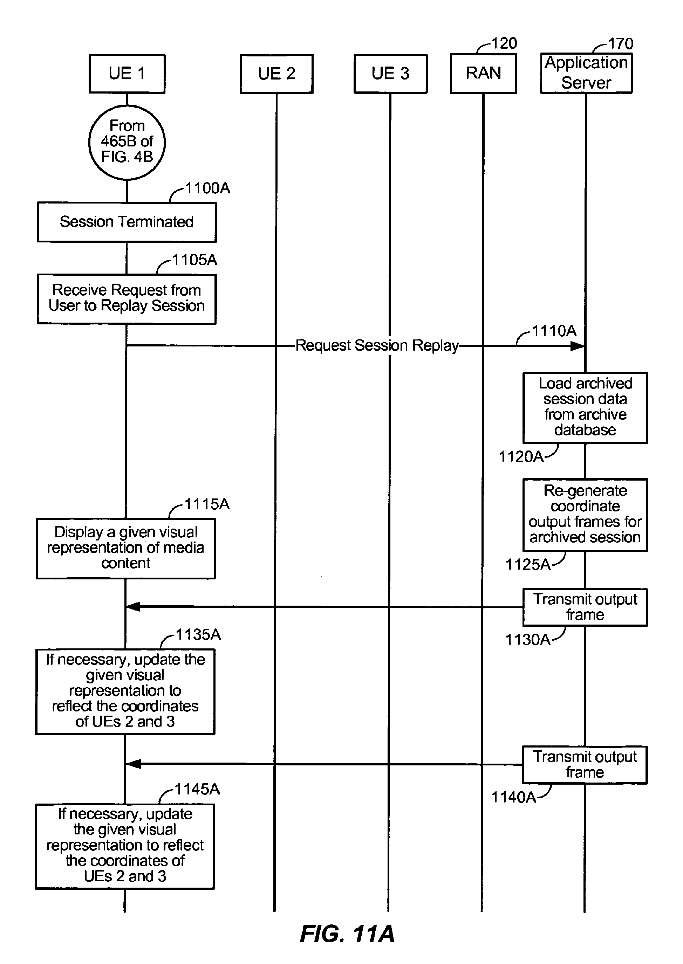

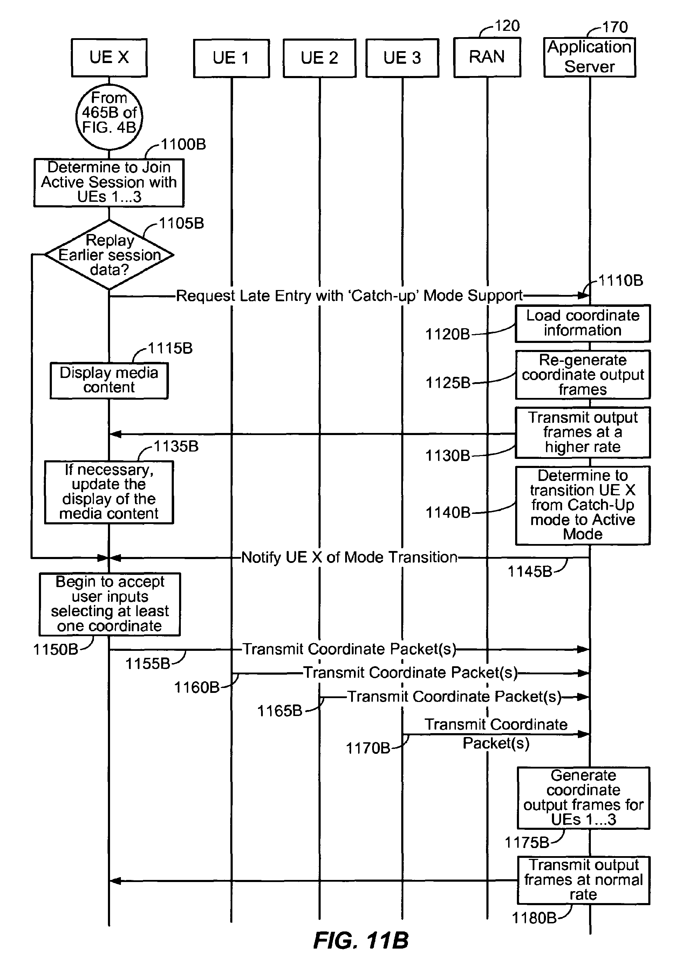

The application server 170 also stores or archives, within the archive database 186, session data associated with the coordinates received from UEs 1...3 in 485A. The archived session data can correspond to the generated output frames that are sent to the target UEs in 470A through 480A. Alternatively, the archived session data can correspond to the 'raw' coordinate data received in 450A through 460A. Alternatively, the application server 170 can archive both the raw coordinate data as well as the generated output frames. The application server 170 can store the archived session data for the group communication session in the archive database 186 that is coupled to the application server 170 as shown in FIG. 2B, or alternatively can store the archive data locally at the application server 170. The archiving of the session data for the group communication session is described in more detail below with respect to FIGS. 11A and 11B.

Referring to 470A through 480A of FIG. 4A, in addition to the transmission of the coordinate output frames to UEs 1...3, the application server 170 can further transmit a set of presentation reconstruction parameters to permit or facilitate reconstruction of the user input or selection from 435A, 440A and/or 445A, respectively. In an example, the set of presentation reconstruction parameters can be received from one or more of UEs 1...3 (as noted above), and then simply forwarded to the appropriate target UEs by the application server 170.

In another example, instead of being generated at the source UE(s) and then reported to the application server 170, the set of presentation reconstruction parameters for reconstructing the coordinate selection(s) of a particular UE can be generated at the application server 170 itself. For example, UE 1 may report its selected coordinate(s), and the application server 170 may determine the selected coordinate(s) to be outside the viewing area of UE 2, for example, and can then adjust the coordinate output frame directed to UE 2 accordingly (e.g., omitting UE 1's selected coordinate, modifying UE 1's selected coordinate, configuring the set of presentation reconstruction parameters transmitted along with the coordinate output frame to UE 2 to include instructions to re-orient or adjust the viewing area of UE 2, etc.). Accordingly, each example discussed above with respect to the set of presentation reconstruction parameters as generated at a respective UE can instead be carried over to the application server 170 in this embodiment.

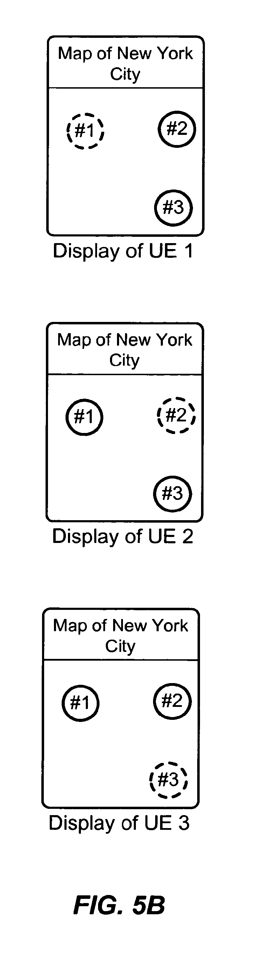

Referring to FIG. 4A, each of UEs 1...3 receive the output frame(s) from the application server 170. Based on the received output frame(s), UEs 1...3 each update the visual representation of the media content on their respective displays to reflect the coordinates of the other UEs as indicated by the received output frame(s), 490A, 493A and 496A. As noted above, the output frame(s) may be received at UEs 1...3 along with a set of presentation reconstruction parameters (e.g., generated either at the source UE(s) and/or the application server 170) that are configured to control the manner in which one or more of the coordinates are reflected in the update to the visual representation at the receiving UE. Further, for example, with the assumptions described above with respect to FIG. 5A, FIG. 5B illustrates an example of the updated visual representations on the displays of UEs 1...3 after 490A, 493A and 496A are performed. As shown in FIG. 5B, some type of indicator (e.g., a raindrop, a star, a watermark, etc.) is added to the visual representation of the media content on the displays of each of UEs 1...3 to show, to the respective users of UEs 1...3, points of interest that have been selected by the other users. Thus, UE 1's visual representation is updated to show indicators of selected coordinates by UEs 2 and 3, respectively, and so on. Also shown in FIG. 5B, a dotted-circle is indicative of each user's own coordinate selection. As will be appreciated, in a touch-screen implementation, the users of UEs 1...3 are physically touching their UE displays at the selected coordinate, such that the finger contact point of the respective users in this scenario would correspond to the dotted-circles shown in FIG. 5B. The dotted-circles themselves thereby need not be graphical objects that are actually displayed by the respective UEs.

While not shown explicitly in FIG. 4A, an indication or acknowledgment that a target UE has updated its visual representation to reflect the reported coordinate selections of another UE or UE(s) can be sent back to the reporting UE (e.g., either by the target UE itself or the application server 170). Accordingly, UE 1 may receive an acknowledgment that UEs 2 and 3 have updated their visual representations based on UE 1's reported coordinate (at 493A and 496A), and so on.

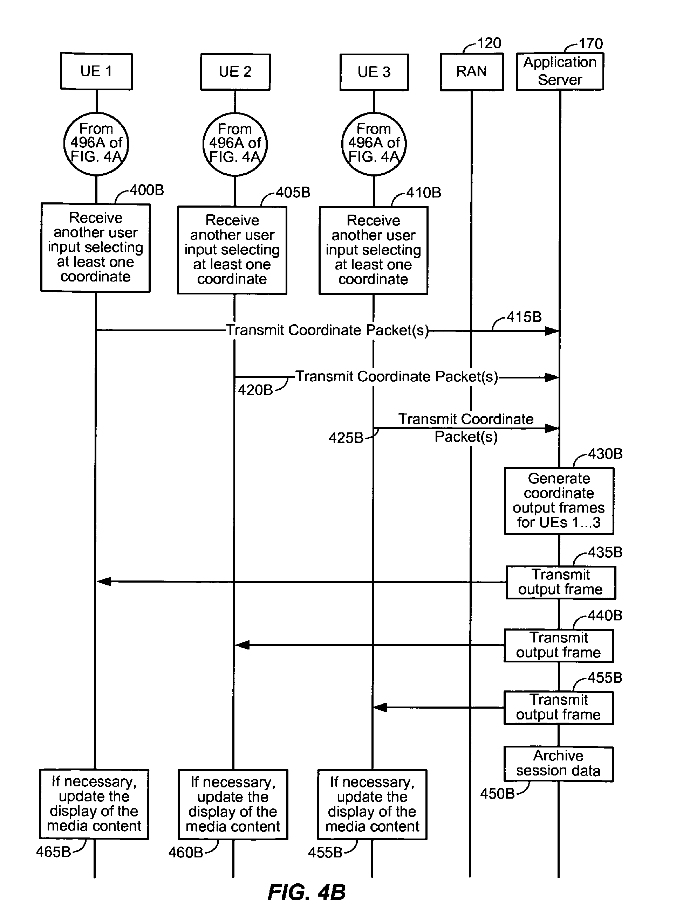

FIG. 4B illustrates a continuation of the process of FIG. 4A in accordance with an embodiment of the invention. Referring to FIG. 4B, each of UEs 1...3 receive another user input, from their respective users, indicative of another selection of at least one coordinate of the visual representations on the displays at UEs 1...3, respectively, 400B, 405B and 410B. For example, the users of UEs 1...3 can each select (e.g., touch, click on, or point to) a particular point of the visual representation on their respective displays, which may be the same point or a different point as was selected in 420A through 430A of FIG. 4A.

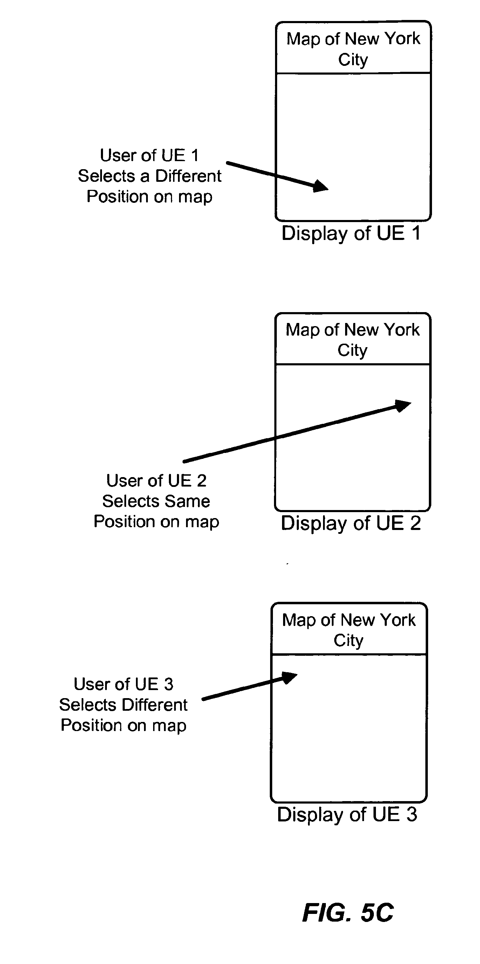

FIG. 5C illustrates an example of the user input that can be received from the users of UEs 1...3 during 400B, 405B and 410B in an example following on FIGS. 5A and 5B whereby the media content corresponds to a map of New York City. As shown in FIG. 5C, the users of UE 1 and UE 3 select different positions of the map, and the user of UE 2 selects the same position of the map. In an example, the changes in FIG. 5C may be the result of the users of UE 1 and UE 3 moving their fingers to different positions on the touchscreen displays of their respective UEs, whereas the user of UE 2 does not move his/her finger.

After determining the selected coordinate(s) at each of UEs 1...3, UEs 1...3 each transmit the selected coordinate packet(s) to the application server 170, 415B, 420B and 425B. The application server 170 receives the coordinate packets from UEs 1...3 within a given coordinate reception period, and generates output frame(s) for transmission to each of UEs 1...3, 430B. The operation of 430B is discussed in much greater detail below with respect to FIGS. 7A through 10B.

After generating the output frame(s) in 430B, the application server 170 transmits the generated output frame(s) to UEs 1...3 in 435B, 440B and 445B. While the transmission of the output frame(s) to UEs 1...3 is illustrated in FIG. 4B as being three separate transmissions consistent with IP unicasting protocols, it will be appreciated that these 'separate' transmissions can be consolidated in the event that the same, common output frame is transmitted to each of UEs 1...3 via IP multicasting or broadcasting protocols (e.g., this is discussed in more detail below with respect to FIG. 8 and FIG. 10B).

The application server 170 also stores or archives, within the archive database 186, session data associated with the coordinates received from UEs 1...3 in 450B, as discussed above with respect to 485A of FIG. 4A. The archiving of the session data for the group communication session is described in more detail below with respect to FIGS. 11A and 11B.

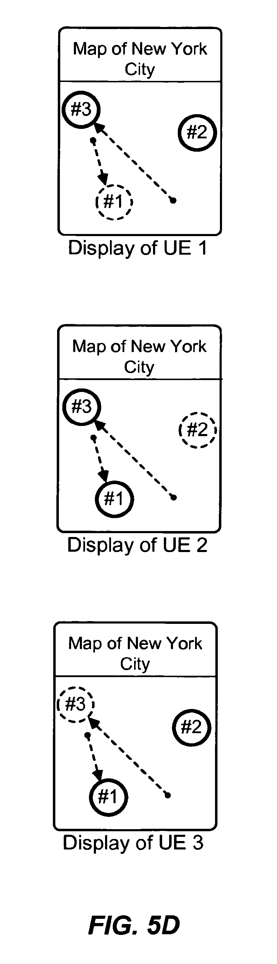

Referring to FIG. 4B, each of UEs 1...3 receive the output frame(s) from the application server 170. Based on the received output frame(s), UEs 1...3 each selectively update the visual representation of the media content on their respective displays to reflect any changes in the coordinates of the other UEs as indicated by the received output frame(s), 455B, 460B and 465B. For example, with the assumptions described above with respect to FIG. 5C, FIG. 5D illustrates an example of the updated visual representations on the displays of UEs 1...3 after 455B, 460B and 465B are performed. As shown in FIG. 5D, the indicators (e.g., a raindrop, a star, a watermark, etc.) used to represent UEs 1 and 3 in association with the visual representations on the displays of UEs 1...3 are moved to reflect the new coordinates of UEs 1 and 3. In FIG. 5B, the dotted-lined arrows are used to denote how the indicators of UEs 1 and 3 have 'moved' from their earlier positions shown in FIG. 5B.

As will be appreciated, in a touch-screen implementation, the users of UEs 1...3 are physically touching their UE displays at the selected coordinate, such that the finger contact point of the respective users in this scenario would correspond to the dotted-circles shown in FIG. 5D. Thereby, the dotted-lined arrows showing movement with respect to the position of the dotted-circles denotes the movement of the fingers of the users of UEs 1 and 3, in an example. It will be appreciated that these dotted arrows are provided for convenience of explanation, and need not be graphical objects that are actually displayed at the respective UEs.

Similar to FIG. 4A, one or more of the coordinate packets transmitted by UEs 1...3 at 415B, 420B and/or 425B, respectively, and/or one or more of the coordinate output frames transmitted by the application server 170 at 435B, 440B and/or 445B, respectively, can be sent in conjunction with a set of presentation reconstruction parameters (e.g., generated at the source UE for a particular coordinate selection or the application server 170 itself). Alternatively, one or more of the coordinate packets transmitted by UEs 1...3 at 415B, 420B and/or 425B, respectively, and/or one or more of coordinates included in the coordinate output frames transmitted by the application server 170 at 435B, 440B and/or 445B, respectively, can be selectively omitted or modified in responsive to a conflict detection at a target UE, as discussed above with respect to FIG. 4A.

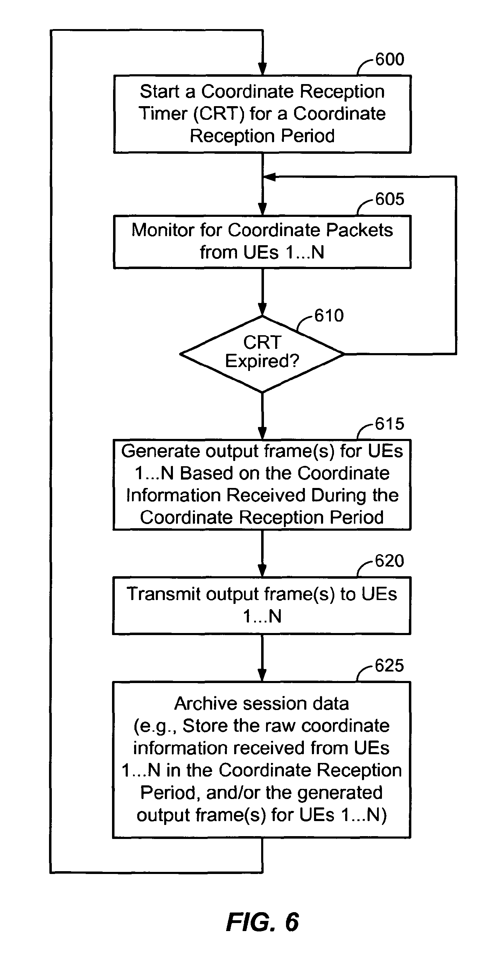

FIG. 6 illustrates operation of the application server 170 during the processes of FIGS. 4A and/or 4B in more detail. In particular, FIG. 6 illustrates the application server 170's operation between 450A and 485A of FIG. 4A and/or between 415B and 450B of FIG. 5B.

With respect to FIG. 6, it may be assumed that, during the group communication session of FIGS. 4A and/or 4B, the application server 170 receives coordinate packets from participating UEs ("UEs 1...N") containing coordinate information within coordinate reception periods. While there are a few exceptions that will be discussed below with respect to FIG. 8, the coordinate packets received during a particular coordinate reception period provide data that is used to populate a set of output frame(s) for that particular coordinate reception period. The UEs participating in the group communication session attempt to provide a coordinate packet for each coordinate reception period. In other words, UEs 1...3 in FIG. 4A attempt to synchronize the transmissions of 450A through 460A such that the transmitted coordinate packets will be received within the same coordinate reception period at the application server 170.

Accordingly, in 600, the application server 170 begins a coordinate reception timer for an initial or next coordination reception period. At this point, the expiration period of the coordinate reception period is set to a default or initial length

(e.g., 200 ms, 300 ms, etc.). Next, the application server 170 monitors for coordinate packets containing coordinate information from UEs 1...N, 605. As shown in FIGS. 4A and 4B, the monitoring of 605 can coincide with the reception of the transmitted coordinates from UEs 1...3 in 450A through 460A and/or 415B through 425B. The application server 170 determines whether the coordinate reception timer has expired in 610. If the application server 170 determines that the coordinate reception timer has not expired in 610, the process returns to 605 and the application server 170 continues to monitor for incoming coordinate packets from the participating UEs. Otherwise, if the application server 170 determines that the coordinate reception timer has expired in 610, the application server 170 generates output frame(s) for transmission to UEs 1...N based on the coordinate information contained in the coordinate packets received during the monitoring of 605, 615. As will be appreciated, the output frame generation of 615 can correspond to 465A of FIG. 4A and/or 430B of FIG. 4B. Further, the manner in which the application server 170 generates the output frame(s) during 615 of FIG. 6 is described in more detail below with respect to FIGS. 8 through 10B.

In 620, the application server 170 transmits the generated output frame(s) to UEs 1...N via IP unicasting and/or IP multicasting protocols. As will be appreciated, the transmission of 620 can correspond to 470A through 480A of FIG. 4A and/or 435B through 445B of FIG. 4B. In 625, the application server 170 archives the session data for the current coordinate reception period. For example, in 625, the application server 170 can store the coordinate information received in the coordinate packets from UEs 1...N during the coordinate reception period of 605 in a 'raw' format, and/or can store the generated output frame(s) from 615. The archiving of 625 can occur within local storage at the application server 170, or at the archive database 186. After archiving the session data for the current coordinate reception period in 625, the process returns to 600 where the application server 170 restarts the coordinate reception timer for the next coordinate reception period. Alternatively, the coordinate reception timer for the next coordinate reception period can be started after 610, such that 615 through 625 can be executed in parallel with the monitoring of coordinate packets for the next coordinate reception period.

While not illustrated explicitly in FIG. 6, one or more of the coordinate packets received during the CRT between 600 and 610 and/or one or more of the output frame(s) transmitted at 620 can be received and/or transmitted in conjunction with a set of presentation reconstruction parameters (e.g., viewing area adjustment instructions, etc.). Examples of presentation reconstruction parameters are provided above with respect to FIGS. 4A and 4B and are not discussed further here for the sake of brevity. Alternatively, one or more coordinates received during the CRT between 600 and 610 can be selectively omitted or modified with respect to one or more output frames during the generation of 615 (e.g., a selected coordinate can be modified to fit the screen or viewing area of a target UE, a selected coordinate that is incompatible with a target UE can be excluded or omitted, etc.). These aspects also apply to FIGS. 7A through 7C, which are discussed below in more detail.

FIGS. 7A through 7C each illustrate a more detailed implementation example of the process of FIG. 6.

Referring to FIG. 7A, either during or prior to set-up of the group communication session of FIG. 4A, the application server 170 determines priority levels associated with each of UEs 1...N, 700A (e.g., in FIG. 4A, N = 3). At some later point in time, the application server 170 begins a coordinate reception timer for a next coordination reception period, 705A (e.g., as in 600 of FIG. 6). At this point, the expiration period of the coordinate reception period is set to a default or initial length. Next, the application server 170 monitors for coordinate packets containing coordinate information from UEs 1...N, 710A (e.g., as in 605 of FIG. 6). During the monitoring of 710A, assume that the application server 170 receives at least one coordinate packet from each of UEs 1...N that is associated with a priority level above a given priority threshold, 715A. In other words, in 715A, the application server 170 determines that each high-priority UE has provided its coordinate packet for the current coordinate reception period.

Accordingly, the application server 170 reduces the length of the coordinate reception period in 720A. In other words, the expiration period of the coordinate reception timer is truncated or shortened. In an example, 720A can correspond to an immediate termination of the coordinate reception period, such that the coordinate reception timer can be said to expire after 720A. Alternatively, 720A can correspond to a reduction in the expiration period of the coordinate reception timer that does not necessarily cause an immediate termination of the coordinate reception period. It will be appreciated that shortening the coordinate reception period in this manner reduces the chance that coordinate packets from each of UEs 1...N will reach the application server 170 in time to be added to the output frame(s) for the current coordinate reception period. However, shortening the coordinate reception period will also reduce the delay before the high-priority UEs are able to share their coordinate information with the other participating UEs.

The application server 170 determines whether the coordinate reception timer has expired in 725A. If the application server 170 determines that the coordinate reception timer has not expired in 725A, the process returns to 710A and the application server 170 continues to monitor for incoming coordinate packets from the participating UEs. Otherwise, if the application server 170 determines that the coordinate reception timer has expired in 725A, the application server 170 generates output frame(s) for transmission to UEs 1...N based on the coordinate information contained in the coordinate packets received during the monitoring of 710A, 730A. The manner in which the application server 170 generates the output frame(s) during 730A of FIG. 7A is described in more detail below with respect to FIGS. 8 through 10B. Next, 735A and 740A substantially correspond to 615 through 625 of FIG. 6, respectively, and as such will not be discussed further for the sake of brevity.

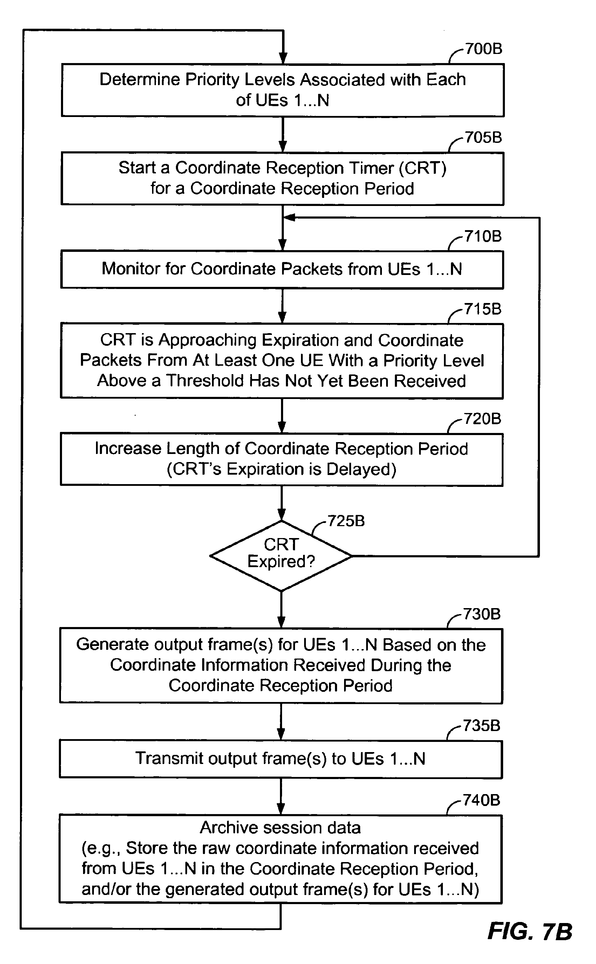

Referring to FIG. 7B, either during or prior to set-up of the group communication session of FIG. 4A, the application server 170 determines priority levels associated with each of UEs 1...N, 700B (e.g., in FIG. 4A, N = 3). At some later point in time, the application server 170 begins a coordinate reception timer for a next coordination reception period, 705B (e.g., as in 600 of FIG. 6). At this point, the expiration period of the coordinate reception period is set to a default or initial length. Next, the application server 170 monitors for coordinate packets containing coordinate information from UEs 1...N, 710B (e.g., as in 605 of FIG. 6). During the monitoring of 710B, assume that the application server 170 determines that the coordinate reception timer is approaching expiration and no coordinate packets have yet been from at least one of UEs 1...N that is associated with a priority level above a given priority threshold, 715B. In other words, in 715B, the application server 170 determines that one or more high-priority UEs have not yet provided their coordinate packet for the current coordinate reception period.

Accordingly, the application server 170 increases or extends the length of the coordinate reception period in 720B. It will be appreciated that extending the coordinate reception period in this manner increases the chance that coordinate packets from UEs 1...N will reach the application server 170 in time to be added to the output frame(s) for the current coordinate reception period. However, extending the coordinate reception period will also increase the delay before the output frame(s) are transmitted by the application server 170 to UEs 1...N.

The application server 170 determines whether the coordinate reception timer has expired in 725B. If the application server 170 determines that the coordinate reception timer has not expired in 725B, the process returns to 710B and the application server 170 continues to monitor for incoming coordinate packets from the participating UEs. Otherwise, if the application server 170 determines that the coordinate reception timer has expired in 725B, the application server 170 generates output frame(s) for transmission to UEs 1...N based on the coordinate information contained in the coordinate packets received during the monitoring of 710B, 730B. The manner in which the application server 170 generates the output frame(s) during 730B of FIG. 7B is described in more detail below with respect to FIGS. 8 through 10B. Next, 735B and 740B substantially correspond to 620 through 625 of FIG. 6, respectively, and as such will not be discussed further for the sake of brevity.

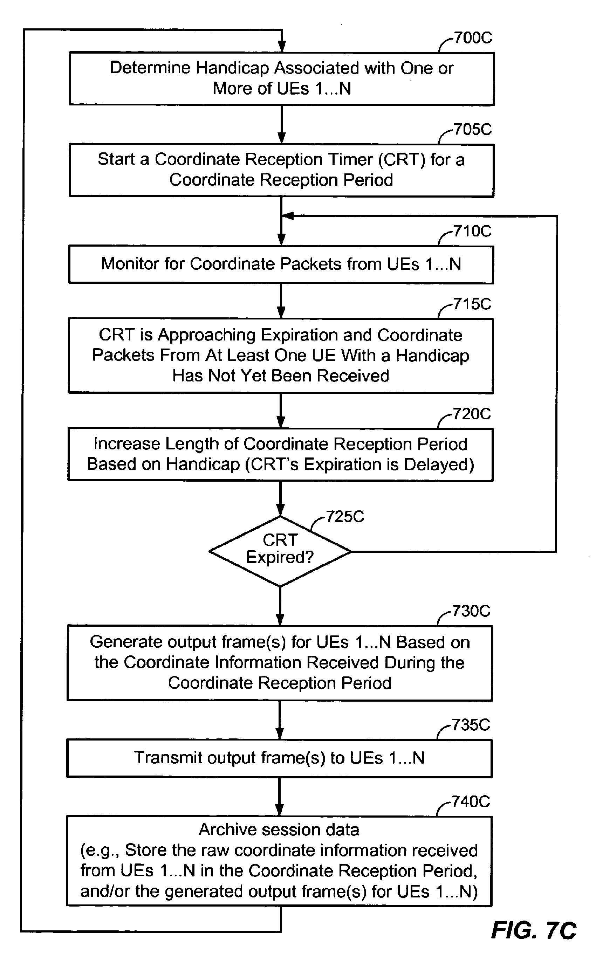

Referring to FIG. 7C, either during or prior to set-up of the group communication session of FIG. 4A, the application server 170 determines a handicap associated with one or more of UEs 1...N, 700C (e.g., in FIG. 4A, N = 3). For example, assume that UEs 1 and 2 are each connected to relatively fast networks (e.g., wired connections, high-speed wireless connections such as WiFi or 4G) and thereby have relatively low latency with respect to their connection to the application server 170. By contrast, assume that UE 3 is connected to a slower network. In this case, the application server 170 can apply a handicap at least to UE 3, such that more time will be selectively allocated to the coordinate reception period in case UE 3's coordinate packet is late in arriving at the application server 170. In an alternative example, the handicap can be determined based on a pilot strength of an access point (AP) that is serving a given UE among UEs 1...N (e.g., a larger handicap would be allocated to a UE with a low pilot strength, for instance). In another alternative example, the handicap can be determined based on a distance between a given UE among UEs 1...N and an access point (AP) that is serving the given UE (e.g., a larger handicap would be allocated to a UE with a higher distance from its serving AP, for instance). In another alternative example, the handicap can be determined based on each UE's past performance in terms of coordinate packet arrival at the application server 170. In this case, a higher handicap can be allocated to UEs that typically have provided their coordinate packets relatively late within their respective coordinate reception periods.

Referring to 700C of FIG. 7C, the degree to which the application server 170 will extend the coordinate reception period (e.g., a 50 ms extension, a 150 ms extension, etc.) for a particular UE can be based on the size of the handicap, and also secondary considerations (e.g., if most of the UEs in the group communication session have fast connection, a handicap to an outlier UE will not be given much weight so the session does not become undesirably slow for most of the UEs).

At some later point in time after the handicap(s) are determined for one or more of UEs 1...N, the application server 170 begins a coordinate reception timer for a next coordination reception period during the group communication session, 705C (e.g., as in 600 of FIG. 6). At this point, the expiration period of the coordinate reception period is set to a default or initial length. Next, the application server 170 monitors for coordinate packets containing coordinate information from UEs 1...N, 710C (e.g., as in 605 of FIG. 6). During the monitoring of 710C, assume that the application server 170 determines that the coordinate reception timer is approaching expiration and no coordinate packets have yet been from at least one of UEs 1...N that is associated with a handicap from 700C, 715C. In other words, in 715C, the application server 170 determines that one or more handicapped UEs have not yet provided their coordinate packet for the current coordinate reception period.

Accordingly, the application server 170 increases or extends the length of the coordinate reception period in 720C. It will be appreciated that extending the coordinate reception period in this manner increases the chance that coordinate packets from UEs 1...N will reach the application server 170 in time to be added to the output frame(s) for the current coordinate reception period. However, extending the coordinate reception period will also increase the delay before the output frame(s) are transmitted by the application server 170 to UEs 1...N.

The application server 170 determines whether the coordinate reception timer has expired in 725C. If the application server 170 determines that the coordinate reception timer has not expired in 725C, the process returns to 710A and the application server 170 continues to monitor for incoming coordinate packets from the participating UEs. Otherwise, if the application server 170 determines that the coordinate reception timer has expired in 725C, the application server 170 generates output frame(s) for transmission to UEs 1...N based on the coordinate information contained in the coordinate packets received during the monitoring of 710C, 730C. The manner in which the application server 170 generates the output frame(s) during 730C of FIG. 7C is described in more detail below with respect to FIGS. 8 through 10B. Next, 735C and 740C substantially correspond to 620 through 625 of FIG. 6, respectively, and as such will not be discussed further for the sake of brevity.

While FIGS. 7A, 7B and 7C illustrate examples whereby the coordinate reception period is either extended or shortened based on the priorities and/or handicaps associated with one or more UEs, it will be appreciated that these embodiments can also be implemented in conjunction in another embodiment. Thus, the coordinate reception period could be extended based on the embodiment of FIG. 7B (e.g., late arrival of coordinate packets from high-priority UEs) and then further extended based on the embodiment of FIG. 7C (e.g., late arrival of coordinate packets from handicapped UEs). Alternatively, the coordinate reception period could be shortened based on the embodiment of FIG. 7A (e.g., early arrival of coordinate packets from high-priority UEs) and then the same coordinate reception period could be extended based on the embodiment of FIG. 7C (e.g., late arrival of coordinate packets from handicapped UEs).

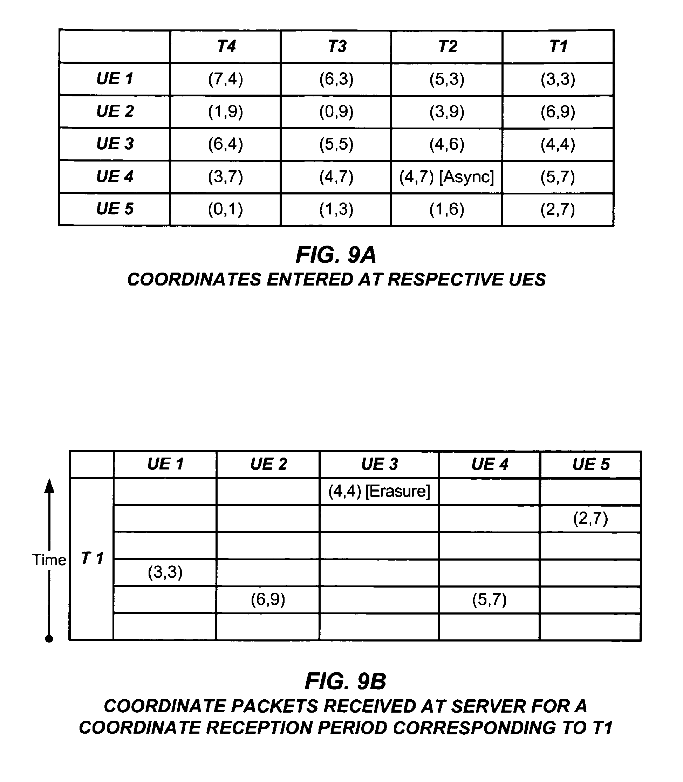

Example implementations of generating the output frame(s) at the application server 170 for one or more coordinate reception periods of a given group communication session will now be described with respect to FIGS. 8 through 10B. In particular, the entirety of FIG. 8 corresponds to one example implementation of 615 of FIG. 6 (e.g., 730A, 730B and/or 730C of FIGS. 7A, 7B and/or 7C, respectively). FIGS. 9A through 10B illustrate examples of data manipulation that can occur during the process of FIG. 8 in accordance with an example embodiment.

Referring to FIG. 8, assume that four (4) non-overlapping time periods T1 through T4 elapse during a group communication session between a set of UEs 1...5, whereby T1 is earlier in time as compared to T2, T2 is earlier in time as compared to T3, and so on. For purposes of explaining FIG. 8, it may be further assumed that the selected coordinates at UEs 1...5 (e.g., as detected at UEs 1...5 at 435A through 445A of FIG. 4A and/or 400B through 410B of FIG. 4B) during the time periods T1 through T4 correspond to the table illustrated in FIG. 9A. For example, at T1, the user of UE 1 is touching UE 1's display at a position corresponding to coordinate (3,3), the user of UE 2 is touching UE 2's display at a position corresponding to coordinate (6,9), and so on. Further, at T2, UE 4 is shown as selecting a position corresponding to coordinate (4,7) in conjunction with UE 2 detecting a given asynchronous event.

For a number of reasons, it will be appreciated that the coordinate packets received at the application server 170 based on the initial coordinate selections shown in the table of FIG. 9A are not necessarily perfectly synchronized. For example, different of the UEs 1...5 can be connected to networks with different latencies and so on. Accordingly, FIGS. 9B through 9D illustrate tables that show examples of coordinate packets received at the application server 170 during coordinate reception periods corresponding to T1, T2 and T3, respectively. In FIGS. 9B through 9D, coordinates (or coordinate information) that are shown in 'lower' cells of the respective tables are representative of coordinate packets received earlier during the coordinate reception period, and coordinates that are shown in 'higher' cells of the respective tables are representative of coordinate packets received later during the coordinate reception period. While not shown explicitly in FIGS. 9B through 9D, the durations of any of the illustrated coordinate reception periods may have been extended and/or shortened in accordance with the embodiments of one or more of FIGS. 7A through 7C.

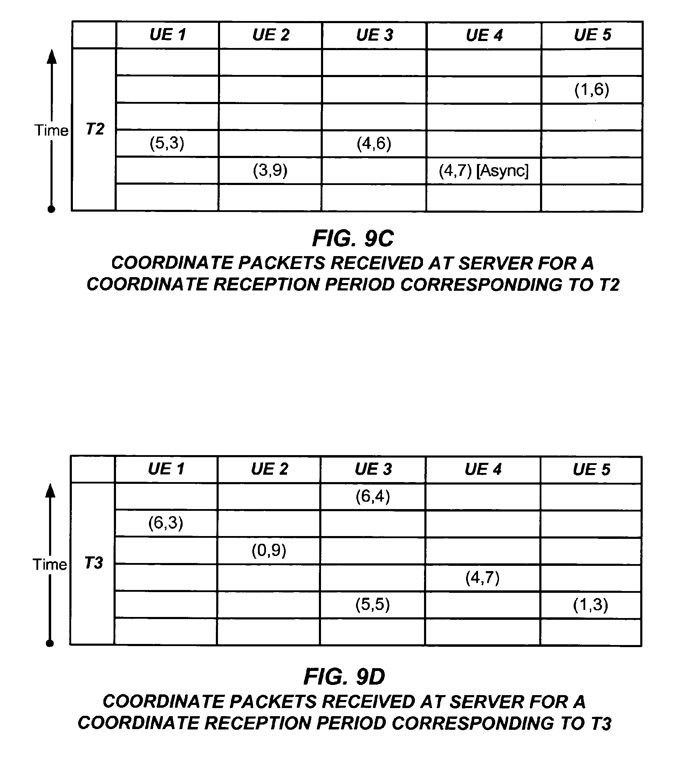

Referring to FIG. 9B, during the coordinate reception period corresponding to T1, UE 3's coordinate packet including a selection of coordinate (4,4) is listed as an 'Erasure'. This means that UE 3 was not able to provide an update to its coordinate(s) in a particular coordinate reception period (e.g., UE 3's coordinate packet was received relatively late during the coordinate reception period, e.g., due to network latency or other reasons). Also, referring to FIG. 9C, during the coordinate reception period corresponding to T2, UE 4's coordinate packet including a selection of coordinate (4,7) is listed in association with an asynchronous indication (e.g., asynchronous events are described in more detail below with respect to 820 of FIG. 8). Further, referring to FIG. 9D, during the coordinate reception period corresponding to T4, UE 3's is shown as providing two separate coordinate packets including selections of both coordinate (5,5) and (6,4), with the coordinate packet corresponding to (5,5) received before the coordinate packet corresponding to (6,4). From a review of FIG. 9A, it will be appreciated that the coordinate packet (6,4) was intended to be associated with the coordinate reception period for T4, and not T3. In other words, the coordinate packet for UE corresponding to coordinate (6,4) was received early ("early packet"). Examples of the manner in which the application server 170 can be configured to handle erasure packets, asynchronous coordinate packets and/or early coordinate packets is discussed in more detail below with respect to FIG. 8.

Referring to FIG. 8, the application server 170 evaluates the coordinate packets received during a given coordinate reception period (e.g., as shown in FIGS. 9B, 9C or 9D) and determines whether a plurality of coordinate packets were received from any of UEs 1...N, 800. In the embodiment of FIG. 8, it is assumed that only one coordinate packet is expected per participating UE. However, it will be appreciated that other embodiments can be directed to a scenario where multiple distinct coordinates can be selected during a single coordinate reception period (e.g., such as a multi-touch embodiment where the user can be touching different positions of the UE's display at the same time). In a multi-coordinate scenario, each distinct coordinate selection can be considered separately so that 800 of FIG. 8 evaluates whether 'duplicative' coordinate selections have been received for a particular coordinate reception period.

If the application server 170 determines that multiple coordinate packets were received for a particular UE in 800 of FIG. 8, the application server 170 infers that one or more of the multiple coordinate packets corresponds to an 'early' packet. In FIG. 9D, the coordinate packet from UE 3 corresponding to coordinate (6,4) is an early packet, since FIG. 9A shows that coordinate (6,4) should not have been received at the application server 170 until T4. Accordingly, after determining which coordinate packet(s) are early packets, the application server 170 drops the early packets such that the early packets are excluded from an output frame for the current coordinate reception period, 805. While not shown explicitly in FIG. 8, the application server 170 can optionally 'push' the dropped coordinate packet(s) to the next coordinate reception period so that the application server 170 can consider whether to add the coordinate from the dropped early packet during a next execution of the process of FIG. 8.

Referring to FIG. 8, the application server 170 determines whether any erasure packets have been received during (i) a current coordinate reception period or (ii) a previous coordinate reception period, 810. If the application server 170 determines that an erasure packet was received during a previous coordinate reception period, the application server 170 determines to insert the coordinates included in the erasure packet in output frame(s) for the current coordinate reception period, whereby the inserted coordinates will be flagged to indicate a 'replacement' coordinate status because these coordinates should have been transmitted in previous output frame(s), 815. Also, if the application server 170 determines that an erasure packet was received during a current coordinate reception period, the application server 170 determines to insert an erasure indicator (without the coordinates of the erasure packet) into output frame(s) for the current coordinate reception period, such that the target UEs of the output frame(s) are put on notice to expect replacement coordinates in the output frame for the next coordinate reception period, 815.

Referring to FIG. 8, the application server 170 determines whether any asynchronous events were reported by one or more of UEs 1...N during a current coordinate reception period, 820. An asynchronous event corresponds to an action made by a given user of one of the UEs participating in the group communication session separate from a coordinate selection. The reporting of the asynchronous event thereby corresponds to separate or additional data with respect to the coordinate information contained in the coordinate packet, although it is possible that the asynchronous event could be reported within the same coordinate packet (e.g., via a modified header or payload portion of the coordinate packet). As an example, assume that the group communication session corresponds to some type of fighting game. Then, in T2 of FIG. 9A, assume that the user of UE 4 both selects coordinate (4,7) and concurrently selects a fighting action (e.g., punch, kick, fire, etc.). In this case, the coordinate (4,7) is reported as described above, and this coordinate is provided along with the indication of the associated action (or asynchronous event). In this specific example, the asynchronous information reported to the application server 170 from UE 4 in T2 could include the type of fighting action, the type of weapon used, and/or any other related information. Further, the asynchronous event need not be directly related to the coordinate, even when the asynchronous event and coordinate are reported in the same coordinate reception period. For example, the asynchronous event may correspond to a user of a given UE casting a spell, for instance, while the user is separately manipulating a given coordinate position on the display (separate from the spell). In a further example, asynchronous events can be used in latency-sensitive situations such that the timing of the asynchronous event can be closely coupled to a current coordinate selection at the UE. Thus, a user firing a gun at a target in a gaming session would require both the asynchronous event ("shoot") and the coordinate to be coupled in order to hit his/her target accurately. While not shown in FIG. 8, less time-sensitive asynchronous events could be sent via out-of-band signaling, or out of sync with the coordinate reception periods at the application server 170.

If the application server 170 determines that an asynchronous packet was received during a current coordinate reception period, the application server 170 determines to insert the coordinates included in the asynchronous packet in output frame(s) for the current coordinate reception period, whereby the inserted coordinates will be flagged to indicate an asynchronous event, 825.

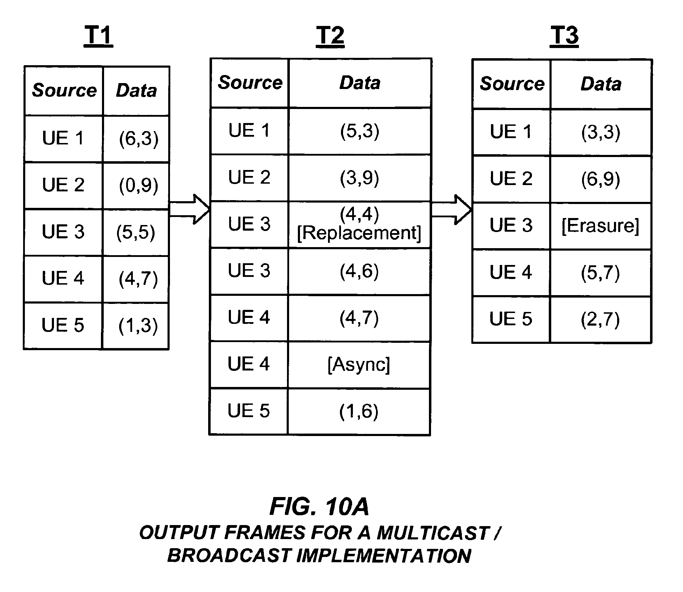

In 830, the application server 170 determines whether to transmit the output frame(s) to the target UEs via IP multicasting (or broadcasting) protocols or via IP unicasting protocols. For example, if a high number of the target UEs are geographically co-located, the application server 170 determines to transmit via IP multicasting protocols in 830, and the application server 170 generates a common output frame for transmission to the target UEs, 835. FIG. 10A illustrates the common output frames to be transmitted to each of UEs 1...5 for the coordinate reception periods corresponding to T1 through T3 based on the assumptions presented above with respect to FIGS. 9A through 9D after an execution of the process of FIG. 8. As will be appreciated, some of the target UEs receive their own reported coordinates in the embodiment of FIG. 10A. For example, UE 1 receives its own reported coordinate of (6,3) in the output frame corresponding to T1. It will be appreciated that the target UEs can ignore their own coordinates from any output frames received in accordance with the IP multicasting implementation of 835, in an example.

Alternatively, if the target UEs are not geographically co-located, the application server 170 determines to transmit via IP unicasting protocols in 830, and the application server 170 generates a plurality of UE-specific output frames for transmission to the target UEs, 840. FIG. 10B illustrates the plurality of output frames to be transmitted to each of UEs 1...5 for the coordinate reception periods corresponding to T1 through T3 based on the assumptions presented above with respect to FIGS. 9A through 9D after an execution of the process of FIG. 8. As shown in FIG. 10B, during 840, the application server 170 can exclude a target UE's own reported coordinate(s) from the output frame generated for that particular target UE.

As will be appreciated by one of ordinary skill in the art, one potential benefit to the archiving of the session data, described above with respect to 485A of FIG. 4A, 450B of FIG. 4B and/or 625 of FIG. 6, is that users can be given the opportunity to replay terminated group communication sessions and/or previous portions of active group communication sessions. Examples of different scenarios where UEs can be configured to replay session data are described below with respect to FIGS. 11A and 11B.

Referring to FIG. 11A, at some point after 465B of FIG. 4B, assume that the group communication session between UEs 1...3 is terminated, 1100A. At some later point in time, UE 1 receives a request from its user to replay the group communication session that was terminated in 1100A, 1105A. UE 1 transmits a session replay request to the application server 170, 1110A. UE 1 displays the initial visual representation of the media content associated with the terminated group communication session in 1115A. For example, UE 1 may receive the media content displayed in 1115A from the application server 170 during set-up of the replay session, or alternatively UE 1 may be preconfigured with the media content and can load this media content while the application server 170 is preparing the archived session data.

The application server 170 loads the archived session data from the archive database 186 in 1120A. As discussed above, the archived session data can include (i) the generated output frames transmitted to the UEs during the terminated group communication session and/or (ii) the 'raw' coordinate data that was received from the UEs during the terminated group communication session and was used to generate the output frames. If the application server 170 archived only the raw coordinate data, the application server 170 re-generates the output frame for UE 1 for a first coordinate reception period of the terminated group communication session in 1125A. Alternatively, if the application server 170 archived the generated output frames for the terminated group communication session, the re-generation of 1125A can be skipped and the archived output frame can be used (e.g., the archived output frame that was previously sent to UE 1 in the terminated group communication session).

In either case, the output frame for UE 1 corresponding to the first coordinate reception period of the terminated group communication session is sent by the application server 170 to UE 1 in 1130A. Based on the received output frame in 1130A, UE 1 selectively updates the visual representation of the media content on its display to reflect the coordinates of the other UEs as indicated by the received output frame, 1135A. The next output frame for UE 1 corresponding to the second coordinate reception period of the terminated group communication session is sent by the application server 170 to UE 1 in 1140A. Based on the received output frame in 1140A, UE 1 selectively updates the visual representation of the media content on its display to reflect any changes in the coordinates of the other UEs as indicated by the received output frame(s), 1145A. 1140A and 1145A can then repeat for the duration of the terminated group communication session and/or until the user of UE 1 determines to stop the replay session.

While not shown in FIG. 11A, because the replay session of FIG. 11A is not a real-time session involving other active participants, the user of UE 1 can playback the replay session at variable speeds. For example, the user of UE 1 can request that the application server 170 playback the replay session more slowly, at the same speed, or faster than the terminated group communication session originally occurred based on the preferences of the user of UE 1. Also, whereas FIG. 11A is directed to replaying a group communication session that was previously terminated, FIG. 11B is directed to an example whereby a new UE belatedly joins an active group communication session and decides to 'catch-up' with the other UEs by replaying earlier portions of the group communication session that were missed by the newcomer.

Referring to FIG. 11B, at some point after 465B of FIG. 4B, assume that the group communication session is ongoing or active when a given UE ("UE X") determines to join the group communication session, 1100B. At this point, the user of UE X is given the option with regard to whether to simply ignore the earlier portions of the group communication session that the user of UE X missed, or whether to replay the earlier portions of the group communication session, 1105B. If the user of UE X determines to ignore the earlier portions of the group communication session that the user of UE X missed in 1105B, the process advances directly to 1150B and UE X begins active participation in the group communication session. Alternatively, if the user of UE X determines to replay the earlier portions of the group communication session in 1105B, UE X transmits a request to join the group communication session in 'catch-up' mode, whereby the earlier portions of the group communication session will be replayed at high-speed (e.g., 2x speed, 3x speed, etc.) to UE X until UE X catches up with UEs 1...3, 1110B.

UE X starts the replay session by displaying the initial visual representation of the media content associated with the terminated group communication session in 1115B. For example, UE X may receive the media content displayed in 1115B from the application server 170 during set-up of the catch-up session, or alternatively UE X may be preconfigured with the media content and can load this media content while the application server 170 is preparing the archived session data for the catch-up session.

The application server 170 loads the archived session data from the archive database 186 in 1120B. As discussed above, the archived session data can include (i) the generated output frames transmitted to the UEs during the terminated group communication session and/or (ii) the 'raw' coordinate data that was received from the UEs during the terminated group communication session and was used to generate the output frames. If the application server 170 archived only the raw coordinate data, the application server 170 re-generates the output frame for UE X for a first coordinate reception period of the terminated group communication session in 1125B. Alternatively, if the application server 170 archived the generated output frames for the terminated group communication session, the re-generation of 1125B can potentially be skipped and the archived output frame can be used. It will be appreciated that if the output frames re-generated in 1125B were earlier transmitted to UEs 1...3 via IP unicasting protocols, these frames may have omitted their target UE associated with the earlier transmission. However, the output frame sent to UE X will include the coordinates from each of UEs 1...3. Also, it will be appreciated that if the output frames re-generated in 1125B were earlier transmitted to UEs 1...3 via IP multicasting protocols, these frames may be transmitted to UE X via IP unicasting protocols (since the other UEs in the group communication session are not operating in catch-up mode and will not be receiving the catch-up output frames).

In either case, the output frame for UE X corresponding to the first coordinate reception period of the active group communication session is sent by the application server 170 to UE X in 1130B. Based on the received output frame in 1130B, UE X selectively updates the visual representation of the media content on its display to reflect the coordinates of the other UEs as indicated by the received output frame, 1135B. At this point, 1130B and 1135B repeat at a rate that is higher than real-time (e.g., 2x speed, 3x speed, etc.) so that UE X views the archived portions of the group communication session while catching up with UEs 1...3 in time. When UE X nears 'real-time' status, the application server 170 determines to transition UE X from catch-up mode and into active-mode whereby UE X is permitted to send its own coordinates to the application server 170 for transmission to the group, 1140B.

At this point, the application server 170 notifies UE X of its transition from catch-up mode and into active-mode, 1145B, UE X begin to accept user inputs from its user that are indicative of selections of at least one coordinate of the visual representation on the display at UE X, 1150B. While not shown explicitly in FIG. 11B, the coordinate selection also occurs at UEs 1...3 (coordinate selection at UEs 1...3 occurs throughout FIG. 11B implicitly).

After determining the selected coordinate(s) at each of UEs 1...3 and X, UEs 1...3 and X each transmit the selected coordinate(s) to the application server 170, 1155B, 1160B, 1165B and 1170B. The application server 170 receives the coordinates from UEs 1...3 and X within a given coordinate reception period, and generates output frame(s) for transmission to each of UEs 1...3 and X, 1175B. After generating the output frame(s) in 1175B, the application server 170 transmits the generated output frame(s) to UE X in 1180B. While not shown explicitly in FIG. 11B, the application server 170 can also send output frames to UEs 1...3. Also, the transmission of output frames to UE X in 1180B occurs at a normal rate (e.g., in real-time) since UE X is not in a current or contemporaneous session with UEs 1...3.

Further, while FIG. 11B is directed to an implementation whereby a late entrant (UE X) to the group communication session is permitted to 'catch-up' with the other participating UEs based on a fast-forward type operation by the application server 170, it will be appreciated that FIG. 11B can be similarly applied to a scenario where UE X was already a participant in the group communication session prior to 1100B. For example, assume that UE X was another participating UE in the group communication session during the process of FIG. 4B. Then, at some later point in time, UE X loses its connection to the application server 170. For example, a UE such as UE X being 'disconnected' from the application server 170 means that the UE is not providing coordinate packets for a threshold period of time (e.g., due to the battery of the UE being drained, the UE losing its connection to the RAN 120, etc.). In this case, the determination of 1100B can correspond to a determination to re-join the group communication session after UE X regains its connection to the application server 170. At this point, the application server 170 could begin to replay the portions of the group communication session that UE 3 missed during its disconnection period in fast-forward or catch-up mode, and so on. Thus, catch-up mode example of FIG. 11B is not merely applicable to 'new' or late entrants to the group communication session, but rather to any UE that may have missed some or all of the group communication session.

Further, the "disconnect" scenario discussed above assumes that the group communication session continues without participation from the disconnected UE. However, in another embodiment, disconnection of the UE may cause the group communication session itself to be torn down (e.g., if the disconnected UE has a high-priority or is considered to be an essential participant). For example, if the group communication session corresponds to a team-gaming session, the loss of a 'player' may result in an unfair game such that the game is suspended until the missing player is able to rejoin. A timer could be used such that a UE is considered to be 'disconnected' after failing to provide coordinate packets for a threshold period of time or for a threshold number of coordinate reception periods. It is also appreciated that not all group communication sessions require full-participation and/or that the disconnected UE could have a low priority relative to the session, such that the session could also be permitted to continue even when one or more UEs are disconnected.

While not illustrated explicitly in FIGS. 11A or 11B, one or more of the coordinate packets received during the CRT between 1155B and 1170B of FIG. 11B and/or one or more of the output frame(s) transmitted at 1130A and/or 1140A of FIG. 11A or 1130B and/or 1180B of FIG. 11B can be received and/or transmitted in conjunction with a set of presentation reconstruction parameters (e.g., viewing area adjustment instructions, etc.). Examples of presentation reconstruction parameters are provided above with respect to FIGS. 4A and 4B and are not discussed further here for the sake of brevity. Alternatively, one or more coordinates received during the CRT between 1155B and 1170B can be selectively omitted or modified with respect to one or more output frames transmitted at 1180B (e.g., a selected coordinate can be modified to fit the screen or viewing area of a target UE, a selected coordinate that is incompatible with a target UE can be excluded or omitted, etc.).

While above-described embodiments of the invention disclose the application server 170 as arbitrating the communication session and mediating the exchange of the coordinate packets, other embodiments of the invention can be directed to a UE-hosted or UE-arbitrated coordinate sharing session. In this embodiment, the UE arbitrating the session acts as a server, and the processes of FIGS. 6 through 8 are implemented by the UE-server instead of the application server 170. In this embodiment, the functionality of the application server 170 from FIG. 4A, for example, is moved to one of the UEs participating in the coordinate sharing which results in a few implementation changes from the example shown in FIG. 4A (e.g., if UE 1 is acting as arbitrator for the session, UE 1 does not need to send a coordinate packet to some external entity but could instead simply receive the coordinate packets from the other UEs and package its own coordinate data directly into the coordinate output frame, and so on). Similar changes could be implemented throughout the other embodiments to accommodate the UE-server implementation as well, as will be recognized by one of ordinary skill in the art.

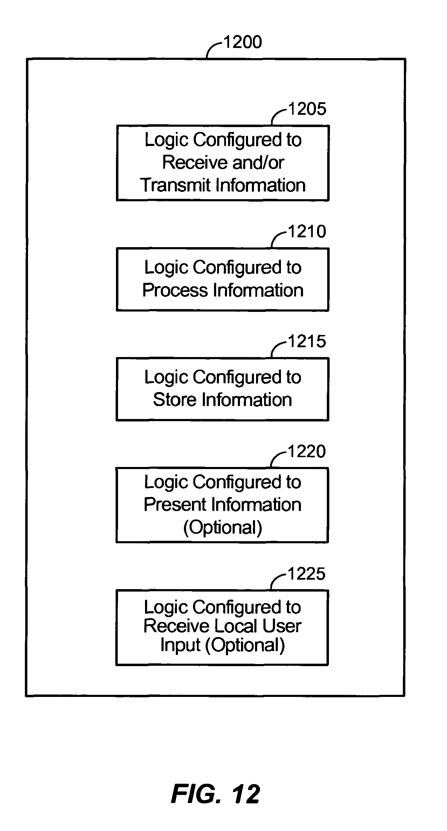

FIG. 12 illustrates a communication device 1200 that includes logic configured to perform functionality. The communication device 1200 can correspond to any of the above-noted communication devices, including but not limited to UEs 102, 108, 110, 112 or 200, Node Bs or base stations 120, the RNC or base station controller 122, a packet data network end-point (e.g., SGSN 160, GGSN 165, a Mobility Management Entity (MME) in Long Term Evolution (LTE), etc.), any of the servers 170 through 186, etc. Thus, communication device 1200 can correspond to any electronic device that is configured to communicate with (or facilitate communication with) one or more other entities over a network.

Referring to FIG. 12, the communication device 1200 includes logic configured to receive and/or transmit information 1205. In an example, if the communication device 1200 corresponds to a wireless communications device (e.g., UE 200, Node B 124, etc.), the logic configured to receive and/or transmit information 1205 can include a wireless communications interface (e.g., Bluetooth, WiFi, 2G, 3G, etc.) such as a wireless transceiver and associated hardware (e.g., an RF antenna, a MODEM, a modulator and/or demodulator, etc.). In another example, the logic configured to receive and/or transmit information 1205 can correspond to a wired communications interface (e.g., a serial connection, a USB or Firewire connection, an Ethernet connection through which the Internet 175 can be accessed, etc.). Thus, if the communication device 1200 corresponds to some type of network-based server (e.g., SGSN 160, GGSN 165, application server 170, etc.), the logic configured to receive and/or transmit information 1205 can correspond to an Ethernet card, in an example, that connects the network-based server to other communication entities via an Ethernet protocol. In a further example, the logic configured to receive and/or transmit information 1205 can include sensory or measurement hardware by which the communication device 1200 can monitor its local environment (e.g., an accelerometer, a temperature sensor, a light sensor, an antenna for monitoring local RF signals, etc.). The logic configured to receive and/or transmit information 1205 can also include software that, when executed, permits the associated hardware of the logic configured to receive and/or transmit information 1205 to perform its reception and/or transmission function(s). However, the logic configured to receive and/or transmit information 1205 does not correspond to software alone, and the logic configured to receive and/or transmit information 1205 relies at least in part upon hardware to achieve its functionality.

Referring to FIG. 12, the communication device 1200 further includes logic configured to process information 1210. In an example, the logic configured to process information 1210 can include at least a processor. Example implementations of the type of processing that can be performed by the logic configured to process information 1210 includes but is not limited to performing determinations, establishing connections, making selections between different information options, performing evaluations related to data, interacting with sensors coupled to the communication device 1200 to perform measurement operations, converting information from one format to another (e.g., between different protocols such as .wmv to .avi, etc.), and so on. For example, the processor included in the logic configured to process information 1210 can correspond to a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The logic configured to process information 1210 can also include software that, when executed, permits the associated hardware of the logic configured to process information 1210 to perform its processing function(s). However, the logic configured to process information 1210 does not correspond to software alone, and the logic configured to process information 1210 relies at least in part upon hardware to achieve its functionality.

Referring to FIG. 12, the communication device 1200 further includes logic configured to store information 1215. In an example, the logic configured to store information 1215 can include at least a non-transitory memory and associated hardware (e.g., a memory controller, etc.). For example, the non-transitory memory included in the logic configured to store information 1215 can correspond to RAM memory, flash memory, ROM memory, EPROM memory, EEPROM memory, registers, hard disk, a removable disk, a CD-ROM, or any other form of storage medium known in the art. The logic configured to store information 1215 can also include software that, when executed, permits the associated hardware of the logic configured to store information 1215 to perform its storage function(s). However, the logic configured to store information 1215 does not correspond to software alone, and the logic configured to store information 1215 relies at least in part upon hardware to achieve its functionality.

Referring to FIG. 12, the communication device 1200 further optionally includes logic configured to present information 1220. In an example, the logic configured to present information 1220 can include at least an output device and associated hardware. For example, the output device can include a video output device (e.g., a display screen, a port that can carry video information such as USB, HDMI, etc.), an audio output device (e.g., speakers, a port that can carry audio information such as a microphone jack, USB, HDMI, etc.), a vibration device and/or any other device by which information can be formatted for output or actually outputted by a user or operator of the communication device 1200. For example, if the communication device 1200 corresponds to UE 200 as shown in FIG. 3, the logic configured to present information 1220 can include the display 224. In a further example, the logic configured to present information 1220 can be omitted for certain communication devices, such as network communication devices that do not have a local user (e.g., network switches or routers, remote servers, etc.). The logic configured to present information 1220 can also include software that, when executed, permits the associated hardware of the logic configured to present information 1220 to perform its presentation function(s). However, the logic configured to present information 1220 does not correspond to software alone, and the logic configured to present information 1220 relies at least in part upon hardware to achieve its functionality.

Referring to FIG. 12, the communication device 1200 further optionally includes logic configured to receive local user input 1225. In an example, the logic configured to receive local user input 1225 can include at least a user input device and associated hardware. For example, the user input device can include buttons, a touch-screen display, a keyboard, a camera, an audio input device (e.g., a microphone or a port that can carry audio information such as a microphone jack, etc.), and/or any other device by which information can be received from a user or operator of the communication device 1200. For example, if the communication device 1200 corresponds to UE 200 as shown in FIG. 3, the logic configured to receive local user input 1225 can include the display 224 (if implemented a touch-screen), keypad 226, etc. In a further example, the logic configured to receive local user input 1225 can be omitted for certain communication devices, such as network communication devices that do not have a local user (e.g., network switches or routers, remote servers, etc.). The logic configured to receive local user input 1225 can also include software that, when executed, permits the associated hardware of the logic configured to receive local user input 1225 to perform its input reception function(s). However, the logic configured to receive local user input 1225 does not correspond to software alone, and the logic configured to receive local user input 1225 relies at least in part upon hardware to achieve its functionality.

Referring to FIG. 12, while the configured logics of 1205 through 1225 are shown as separate or distinct blocks in FIG. 12, it will be appreciated that the hardware and/or software by which the respective configured logic performs its functionality can overlap in part. For example, any software used to facilitate the functionality of the configured logics of 1205 through 1225 can be stored in the non-transitory memory associated with the logic configured to store information 1215, such that the configured logics of 1205 through 1225 each performs their functionality (i.e., in this case, software execution) based in part upon the operation of software stored by the logic configured to store information 1205. Likewise, hardware that is directly associated with one of the configured logics can be borrowed or used by other configured logics from time to time. For example, the processor of the logic configured to process information 1210 can format data into an appropriate format before being transmitted by the logic configured to receive and/or transmit information 1205, such that the logic configured to receive and/or transmit information 1205 performs its functionality (i.e., in this case, transmission of data) based in part upon the operation of hardware (i.e., the processor) associated with the logic configured to process information 1210. Further, the configured logics or "logic configured to" of 1205 through 1225 are not limited to specific logic gates or elements, but generally refer to the ability to perform the functionality described herein (either via hardware or a combination of hardware and software). Thus, the configured logics or "logic configured to" of 1205 through 1225 are not necessarily implemented as logic gates or logic elements despite sharing the word "logic". Other interactions or cooperation between the configured logics 1205 through 1225 will become clear to one of ordinary skill in the art from a review of the embodiments described below in more detail.

While references in the above-described embodiments of the invention have generally used the terms 'call' and 'session' interchangeably, it will be appreciated that any call and/or session is intended to be interpreted as inclusive of actual calls between different parties, or alternatively to data transport sessions that technically may not be considered as 'calls'. Also, while above-embodiments have generally described with respect to PTT sessions, other embodiments can be directed to any type of communication session, such as a push-to-transfer (PTX) session, an emergency VoIP call, etc.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., access terminal). In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the defmition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method of operating a user equipment (UE) that is participating in a coordinate-sharing communication session with at least one other UE that is arbitrated by a server, comprising:
displaying (420A, 425A, 430A), on a display of the UE, a given visual representation of media content associated with the coordinate-sharing communication session;
receiving user input (435A, 440A, 445A) that indicates a selection of at least one coordinate of the given visual representation; and
selectively transmitting (455A, 460A, 450A) a coordinate packet indicating the selection of the at least one coordinate to the server for dissemination to the at least one other UE;
**characterised in that** the co-ordinate packet indicates the selection of the at least one co-ordinate by indicating a position at which the selection occurred relative to the given visual representation on the display of the UE.

2. The method of claim 1, wherein the coordinate packet further indicates the selection of the at least one coordinate by indicating a set of presentation reconstruction parameters associated with the given visual representation to permit reconstruction of the selection at the at least one other UE for at least one different version of the given visual representation.

3. The method of claim 2, further comprising:
determining that the selection selects a position outside of a viewing area of the given visual representation as presented at the at least one other UE,
wherein the set of presentation reconstruction parameters include a request to adjust the viewing area at the at least one other UE for presentation of the at least one coordinate selected at the UE.

4. The method of claim 1, further comprising:
receiving an indication that indicates whether the at least one other UE presented the selection of the at least one coordinate.

5. The method of claim 1, further comprising:
determining that presentation of the at least one coordinate conflicts with a presentation of the given visual representation at the at least one other UE,
wherein the selectively transmitting step does not transmit the coordinate packet indicating the selection of the at least one coordinate based on the determination.

6. The method of claim 5, wherein the determining step determines (i) that the at least one coordinate would be presented outside of a viewing area of the given visual representation at the at least one other UE, or (ii) that the at least one coordinate is not capable of being presented at the at least one other UE.

7. The method of claim 1, further comprising:
determining that presentation of the at least one coordinate conflicts with a presentation of the given visual representation at the at least one other UE;
modifying the selection of the at least one coordinate to reconcile the determined conflict,
wherein the selectively transmitting step transmits the coordinate packet indicating the modified selection of the at least one coordinate.

8. The method of claim 1, wherein the server corresponds to (i) a given UE participating in the coordinate-sharing communication session or (ii) a network entity external to UEs participating in the coordinate-sharing communication session.

9. The method of claim 1, wherein the media content is exchanged between the UE and the at least one other UE in conjunction with the coordinate-sharing communication session.

10. The method of claim 1, wherein the media content is independently obtained at the UE and the at least one other UE such that the media content is not exchanged between the UE and the at least one other UE in conjunction with the coordinate-sharing communication session.

11. The method of claim 1,
wherein the receiving and selectively transmitting steps repeat for a plurality of time intervals,
wherein each instance of the receiving step determines a single user input representative of a single time interval, and
wherein each instance of the selectively transmitting step attempts to transmit the single user input for a respective single time interval.

12. The method of claim 1, wherein the selectively transmitting step transmits the coordinate packet in conjunction with transmission of a talk spurt.

13. The method of claim 1, further comprising:
detecting an asynchronous event at the UE that is independent of the selection of the at least one coordinate,
wherein the selectively transmitting step transmits the coordinate packet in conjunction with asynchronous data associated with the detected asynchronous event.

14. A method of operating a user equipment (UE) that is participating in a coordinate-sharing communication session with at least one other UE that is arbitrated by a server, comprising:
displaying, on a display of the UE, a given visual representation of media content associated with the coordinate-sharing communication session;
receiving a coordinate output frame from the server that indicates a set of coordinates based on the given visual representation as displayed at one or more other UE(s) and that have been selected via user input at the one or more other UE(s) during a given period of time in the coordinate-sharing communication session; and
selectively updating the given visual representation to reflect the set of coordinates contained in the received coordinate output frame;
**characterised in that** the co-ordinate output frame indicates the selection of the at least one co-ordinate by indicating a position at which the selection occurred relative to the given visual representation on the display of the UE.

15. A method of arbitrating a coordinate-sharing communication session between a plurality of user equipments (UEs) at a server, comprising:
monitoring, during a coordinate reception period (CRP), for coordinate packets from the plurality of UEs that indicate information associated with media content that is being displayed at each of the plurality of UEs;
receiving, from at least one of the plurality of UEs, a coordinate packet during the CRP that indicates a selection of a coordinate of a visual representation of the media content by user input at the at least one UE; **characterised in that** the coordinate packet indicates the selection of the at least one coordinate by indicating a position at which the selection occurred relative to the given visual representation on a display of the at least one UE;
formatting the selected coordinate from the received coordinate packet into a set of coordinate output frames configured to indicate coordinate selections by the plurality of UEs during the CRP; and
transmitting the set of coordinate output frames to the plurality of UEs.

16. A user equipment (UE) configured to participate in a coordinate-sharing communication session with at least one other UE that is arbitrated by a server, comprising (224):
means for displaying a given visual representation of media content associated with the coordinate-sharing communication session;
means for receiving user input that indicates a selection of at least one coordinate of the given visual representation; and
means (222) for selectively transmitting a coordinate packet indicating the selection of the at least one coordinate to the server for dissemination to the at least one other UE,
**characterised in that** the coordinate packet indicates the selection of the at least one co-ordinate by indicating a position at which the selection occurred relative to the given visual representation on the display of the UE.

17. A user equipment (UE) configured to participate in a coordinate-sharing communication session with at least one other UE that is arbitrated by a server, comprising:
means (224) for displaying a given visual representation of media content associated with the coordinate-sharing communication session;
means for receiving a coordinate output frame from the server that indicates a set of coordinates based on the given visual representation as displayed at one or more other UE(s) and that have been selected via user input at the one or more other UE(s) during a given period of time in the coordinate-sharing communication session; and means for selectively updating the given visual representation to reflect the set of coordinates contained in the received coordinate output frame;
**characterised in that** the co-ordinate output frame indicates the selection of the at least one co-ordinate by indicating a position at which the selection occurred relative to the given visual representation on the display of the UE.

18. A server (170) configured to arbitrate a coordinate-sharing communication session between a plurality of user equipments (UEs), comprising:
means for monitoring, during a coordinate reception period (CRP), for coordinate packets from the plurality of UEs that indicate information associated with media content that is being displayed at each of the plurality of UEs;
means for receiving, from at least one of the plurality of UEs, a coordinate packet during the CRP that indicates a selection of a coordinate of a visual representation of the media content by user input at the at least one UE; **characterised in that** the co-ordinate packet indicates the selection of the at least one co-ordinate by indicating a position at which the selection occurred relative to the given visual representation on the display of the UE;
means for formatting the selected coordinate from the received coordinate packet into a set of coordinate output frames configured to indicate coordinate selections by the plurality of UEs during the CRP; and
means for transmitting the set of coordinate output frames to the plurality of UEs.

19. A non-transitory computer-readable medium containing instructions stored thereon, which, when executed by a user equipment (UE) configured to participate in a coordinate-sharing communication session with at least one other UE that is arbitrated by a server, cause the UE to perform the method of any of claims 1 to 15.

## Patentansprüche

1. Ein Verfahren zum Betreiben eines Benutzergeräts (User Equipment bzw. UE), das an einer gemeinsame Koordinaten nutzenden Kommunikationssitzung mit wenigstens einem anderen, durch einen Server vermittelten UE teilnimmt, wobei das Verfahren die folgenden Schritte aufweist:
Anzeigen (420A, 425A, 430A), auf einer Anzeige des UE, einer gegebenen visuellen Wiedergabe von Medieninhalten, die mit der gemeinsame Koordinaten nutzenden Kommunikationssitzung assoziiert sind,
Empfangen einer Benutzereingabe (435A, 440A, 445A), die eine Auswahl von wenigstens einer Koordinate der gegebenen visuellen Wiedergabe angibt, und
wahlweises Senden (455A, 460A, 450A) eines Koordinatenpakets, das die Auswahl der wenigstens einen Koordinate angibt, an den Server für eine Verbreitung zu dem wenigstens einen anderen UE,
**dadurch gekennzeichnet, dass** das Koordinatenpaket die Auswahl der wenigstens einen Koordinate angibt, indem sie eine Position angibt, an welcher die Auswahl relativ zu der gegebenen visuellen Wiedergabe auf der Anzeige des UE erfolgt ist.

2. Verfahren nach Anspruch 1, wobei das Koordinatenpaket weiterhin die Auswahl der wenigstens einen Koordinate angibt, indem sie einen Satz von Darstellungsrekonstruktionsparametern angibt, die mit der gegebenen visuellen Wiedergabe assoziiert sind, um eine Rekonstruktion der Auswahl an dem wenigstens einen anderen UE für wenigstens eine andere Version der gegebenen visuellen Wiedergabe zu gestatten.

3. Verfahren nach Anspruch 2, das weiterhin aufweist:
Bestimmen, dass die Auswahl eine Position außerhalb eines Sichtbereichs der gegebenen visuellen Wiedergabe, wie sie an dem wenigstens einen anderen UE dargestellt wird, auswählt,
wobei der Satz von Darstellungsrekonstruktionsparametern eine Anfrage zum Einstellen des Sichtbereichs des wenigstens einen anderen UE für eine Darstellung der an dem UE ausgewählten wenigstens einen Koordinate enthält.

4. Verfahren nach Anspruch 1, das weiterhin aufweist:
Empfangen einer Angabe, die angibt, ob das wenigstens eine andere UE die Auswahl der wenigstens einen Koordinate dargestellt hat.

5. Verfahren nach Anspruch 1, das weiterhin aufweist:
Bestimmen, dass die Darstellung der wenigstens einen Koordinate in Konflikt mit einer Darstellung der gegebenen visuellen Wiedergabe an dem wenigstens einen anderen UE ist,
wobei der Schritt zum wahlweisen Senden das Koordinatenpaket, das die Auswahl der wenigstens einen Koordinate angibt, basierend auf der Bestimmung nicht sendet.

6. Verfahren nach Anspruch 5, wobei der Schritt zum Bestimmen bestimmt, (i) dass die wenigstens eine Koordinate außerhalb eines Sichtbereichs der gegebenen visuellen Wiedergabe an dem wenigstens einen anderen UE dargestellt würde, oder (ii) dass die wenigstens eine Koordinate nicht an dem wenigstens einen anderen UE dargestellt werden kann.

7. Verfahren nach Anspruch 1, das weiterhin aufweist:
Bestimmen, dass die Darstellung der wenigstens einen Koordinate in Konflikt mit einer Darstellung der gegebenen visuellen Wiedergabe des wenigstens einen anderen UE ist,
Modifizieren der Auswahl der wenigstens einen Koordinate, um den bestimmten Konflikt zu lösen,
wobei der Schritt zum wahlweisen Senden das Koordinatenpaket, das die modifizierte Auswahl der wenigstens einen Koordinate angibt, sendet.

8. Verfahren nach Anspruch 1, wobei der Server (i) einem bestimmten UE, das an der gemeinsame Koordinaten nutzenden Kommunikationssitzung teilnimmt, oder (ii) einer Netzwerkeinheit, die extern zu den an der gemeinsame Koordinaten nutzenden Kommunikationssitzung teilnehmenden UEs ist, entspricht.

9. Verfahren nach Anspruch 1, wobei die Medieninhalte zwischen dem UE und dem wenigstens einen anderen UE in Verbindung mit der gemeinsame Koordinaten nutzenden Kommunikationssitzung ausgetauscht werden.

10. Verfahren nach Anspruch 1, wobei die Medieninhalte unabhängig an dem UE und an dem wenigstens einen anderen UE erhalten werden, sodass die Medieninhalte nicht zwischen dem UE und dem wenigstens einen anderen UE in Verbindung mit der gemeinsame Koordinaten nutzenden Kommunikationssitzung ausgetauscht werden.

11. Verfahren nach Anspruch 1,
wobei die Schritte zum Empfangen und wahlweisen Senden für eine Vielzahl von Zeitintervallen wiederholt werden,
wobei jede Instanz des Schritts zum Empfangen eine einzelne Benutzereingabe bestimmt, die repräsentativ für ein einzelnes Zeitintervall ist, und
wobei jede Instanz des Schritts zum wahlweisen Senden versucht, die einzelne Benutzereingabe für ein entsprechendes einzelnes Zeitintervall zu senden.

12. Verfahren nach Anspruch 1, wobei der Schritt zum wahlweisen Senden das Koordinatenpaket in Verbindung mit dem Senden eines Talk-Spurts sendet.

13. Verfahren nach Anspruch 1, das weiterhin aufweist:
Erfassen eines asynchronen Ereignisses an dem UE, das unabhängig von der Auswahl der wenigstens einen Koordinate ist,
wobei der Schritt zum wahlweisen Senden das Koordinatenpaket in Verbindung mit den asynchronen Daten sendet, die mit dem erfassten asynchronen Ereignis assoziiert sind.

14. Ein Verfahren zum Betreiben eines Benutzergeräts (User Equipment bzw. UE), das an einer gemeinsame Koordinaten nutzenden Kommunikationssitzung mit wenigstens einem anderen, durch einen Server vermittelten UE teilnimmt, wobei das Verfahren folgende Schritte aufweist:
Anzeigen, auf der Anzeige des UE, einer gegebenen visuellen Wiedergabe von Medieninhalten, die mit der gemeinsame Koordinaten nutzenden Kommunikationssitzung assoziiert sind,
Empfangen eines Koordinatenausgaberahmens von dem Server, der basierend auf der an einem oder mehreren anderen UEs angezeigten gegebenen visuellen Wiedergabe einen Satz von Koordinaten angibt, die über eine Benutzereingabe an dem einen oder den mehreren anderen UEs während einer gegebenen Zeitperiode in der gemeinsame Koordinaten nutzenden Kommunikationssitzung ausgewählt wurden, und
wahlweises Aktualisieren der gegebenen visuellen Widergabe, um den in dem empfangenen Koordinatenausgaberahmen enthaltenen Satz von Koordinaten zu berücksichtigen,
**dadurch gekennzeichnet, dass** der Koordinatenausgaberahmen die Auswahl der wenigstens einen Koordinate angibt, indem er eine Position angibt, an welcher die Auswahl relativ zu der gegebenen visuellen Wiedergabe auf der Anzeige des UE erfolgt ist.

15. Ein Verfahren zum Vermitteln einer gemeinsame Koordinaten nutzenden Kommunikationssitzung zwischen einer Vielzahl von Benutzergeräten (User Equipments bzw. UEs) an einem Server, wobei das Verfahren folgende Schritte aufweist:
Warten auf bzw. Ausschau halten, während einer Koordinatenempfangsperiode (Coordinate Reception Period bzw. CRP), nach Koordinatenpakete von der Vielzahl von UEs, die Informationen angeben, die mit an jedem aus der Vielzahl von UEs angezeigten Medieninhalten assoziiert sind,
Empfangen, von wenigstens einem aus der Vielzahl von UEs, eines Koordinatenpakets während der CRP, das eine Auswahl einer Koordinate einer visuellen Wiedergabe der Medieninhalte durch eine Benutzereingabe an dem wenigstens einen UE angibt, **dadurch gekennzeichnet, dass** das Koordinatenpaket die Auswahl der wenigstens einen Koordinate angibt, indem es eine Position angibt, an welcher die Auswahl relativ zu der gegebenen visuellen Wiedergabe auf einer Anzeige des wenigstens einen UE erfolgt ist,
Formatieren der ausgewählten Koordinate aus dem empfangenen Koordinatenpaket zu einem Satz von Koordinatenausgaberahmen, die konfiguriert sind, um Koordinatenauswahlen durch die Vielzahl von UEs während der CRP anzugeben, und
Senden des Satzes von Koordinatenausgaberahmen an die Vielzahl von UEs.

16. Ein Benutzergerät (User Equipment bzw. UE), das konfiguriert ist, um an einer gemeinsame Koordinaten nutzenden Kommunikationssitzung mit wenigstens einem anderen, durch einen Server vermittelten UE teilzunehmen, aufweisend:
Mittel (224) zum Anzeigen einer gegebenen visuellen Wiedergabe von Medieninhalten, die mit der gemeinsame Koordinaten nutzenden Kommunikationssitzung assoziiert sind,
Mittel zum Empfangen einer Benutzereingabe, die eine Auswahl wenigstens einer Koordinate der gegebenen visuellen Wiedergabe angibt, und
Mittel (222) zum wahlweisen Senden eines Koordinatenpakets, das die Auswahl der wenigstens einen Koordinate angibt, an den Server für eine Verbreitung zu dem wenigstens einem anderen UE,
**dadurch gekennzeichnet, dass** das Koordinatenpaket die Auswahl der wenigstens einen Koordinate angibt, indem es eine Position angibt, an welcher die Auswahl relativ zu der gegebenen visuellen Wiedergabe auf einer Anzeige des UE erfolgt ist.

17. Ein Benutzergerät (User Equipment bzw. UE), das konfiguriert ist, um an einer gemeinsame Koordinaten nutzenden Kommunikationssitzung mit wenigstens einem anderen, durch einen Server vermittelten UE teilzunehmen, aufweisend:
Mittel (224) zum Anzeigen einer gegebenen visuellen Wiedergabe von Medieninhalten, die mit der gemeinsame Koordinaten nutzenden Kommunikationssitzung assoziiert sind,
Mittel zum Empfangen eines Koordinatenausgaberahmens von dem Server, der basierend auf der an einem oder mehreren anderen UEs angezeigten gegebenen visuellen Wiedergabe einen Satz von Koordinaten angibt, die über eine Benutzereingabe an dem einen oder den mehreren anderen UEs während einer gegebenen Zeitperiode in der gemeinsame Koordinaten nutzenden Kommunikationssitzung ausgewählt wurden, und
Mittel zum wahlweisen Aktualisieren der gegebenen visuellen Widergabe, um den in dem empfangenen Koordinatenausgaberahmen enthaltenen Satz von Koordinaten zu berücksichtigen,
**dadurch gekennzeichnet, dass** der Koordinatenausgaberahmen die Auswahl der wenigstens einen Koordinate angibt, indem er eine Position angibt, an welcher die Auswahl relativ zu der gegebenen visuellen Wiedergabe auf der Anzeige des UE erfolgt ist.

18. Ein Server (170), der konfiguriert ist, um eine gemeinsame Koordinaten nutzende Kommunikationssitzung zwischen einer Vielzahl von Benutzergeräten (User Equipments bzw. UEs) zu vermitteln, aufweisend:
Mittel zum Warten auf bzw. Ausschau halten, während einer Koordinatenempfangsperiode (Coordinate Reception Period bzw. CRP), nach Koordinatenpakete von der Vielzahl von UEs, die Informationen angeben, die mit an jedem aus der Vielzahl von UEs angezeigten Medieninhalten assoziiert sind,
Mittel zum Empfangen, von wenigstens einem aus der Vielzahl von UEs, eines Koordinatenpakets während der CRP, das eine Auswahl einer Koordinate einer visuellen Wiedergabe der Medieninhalte durch eine Benutzereingabe an dem wenigstens einen UE angibt, **dadurch gekennzeichnet, dass** das Koordinatenpaket die Auswahl der wenigstens einen Koordinate angibt, indem es eine Position angibt, an welcher die Auswahl relativ zu der gegebenen visuellen Wiedergabe auf der Anzeige des UE erfolgt ist,
Mittel zum Formatieren der ausgewählten Koordinate aus dem empfangenen Koordinatenpaket zu einem Satz von Koordinatenausgaberahmen, die konfiguriert sind, um Koordinatenauswahlen durch die Vielzahl von UEs während der CRP anzugeben, und
Mittel zum Senden des Satzes von Koordinatenausgaberahmen an die Vielzahl von UEs.

19. Ein nicht-transitorisches, computerlesbares Medium mit darauf gespeicherten Befehlen, die bei einer Ausführung durch ein Benutzergerät (User Equipment bzw. UE), das konfiguriert ist, um an einer gemeinsame Koordinaten nutzenden Kommunikationssitzung mit wenigstens einem anderen, durch einen Server vermittelten UE teilzunehmen, veranlassen, dass das UE das Verfahren nach einem der Ansprüche 1 bis 15 durchführt.

## Revendications

1. Procédé pour actionner un équipement d'utilisateur (UE) qui participe à une session de communication à partage de coordonnées avec au moins un autre UE, qui est arbitrée par un serveur, comprenant :
afficher (420A, 425A, 430A), sur un afficheur de l'UE, une représentation visuelle donnée de contenu de média associée à la session de communication à partage de coordonnées ;
recevoir une entrée d'utilisateur (435A, 440A, 445A) qui indique une sélection d'au moins une coordonnée de la représentation visuelle donnée ; et
transmettre sélectivement (455A, 460A, 450A) un paquet de coordonnées indiquant la sélection de ladite au moins une coordonnée au serveur pour une dissémination vers ledit au moins un autre UE ;
**caractérisé en ce que** le paquet de coordonnées indique la sélection de ladite au moins une coordonnée en indiquant une position à laquelle la sélection a eu lieu par rapport à la représentation visuelle donnée sur l'afficheur de l'UE.

2. Procédé selon la revendication 1, dans lequel le paquet de coordonnées indique en outre la sélection de ladite au moins une coordonnée en indiquant un ensemble de paramètres de reconstruction de présentation associés à la représentation visuelle donnée pour permettre la reconstruction de la sélection au niveau dudit au moins un autre UE pour au moins une version différente de la représentation visuelle donnée.

3. Procédé selon la revendication 2, comprenant en outre :
déterminer que la sélection sélectionne une position en dehors d'une région de visualisation de la représentation visuelle donnée telle que représentée au niveau dudit au moins un autre UE,
dans lequel l'ensemble de paramètres de reconstruction de présentation inclut une requête pour ajuster la région de visualisation au niveau dudit au moins un autre UE pour une présentation de ladite au moins une coordonnée sélectionnée au niveau de l'UE.

4. Procédé selon la revendication 1, comprenant en outre :
recevoir une indication qui indique si ledit au moins un autre UE a présenté la sélection de ladite au moins une coordonnée.

5. Procédé selon la revendication 1, comprenant en outre :
déterminer que la présentation de ladite au moins une coordonnée est en conflit avec une présentation de la représentation visuelle donnée au niveau dudit au moins un autre UE,
dans lequel l'étape consistant à transmettre sélectivement ne transmet pas le paquet de coordonnées indiquant la sélection de ladite au moins une coordonnée sur la base de la détermination.

6. Procédé selon la revendication 5, dans lequel l'étape de détermination détermine (i) que ladite au moins une autre coordonnée serait présentée en dehors d'une région de visualisation de la représentation visuelle donnée au niveau dudit au moins un autre UE, ou (ii) que ladite au moins une coordonnée n'est pas capable d'être présentée audit au moins un autre UE.

7. Procédé selon la revendication 1, comprenant en outre :
déterminer que la présentation de ladite au moins une coordonnée est en conflit avec une présentation de la représentation visuelle donnée au niveau dudit au moins un autre UE ;
modifier la sélection de ladite au moins une coordonnée pour concilier le conflit déterminé,
dans lequel l'étape consistant à transmettre sélectivement transmet le paquet de coordonnées indiquant la sélection modifiée de ladite au moins une coordonnée.

8. Procédé selon la revendication 1, dans lequel le serveur correspond au fait que (i) un UE donné participe à la session de communication à partage de coordonnées ou (ii) une entité de réseau, externe à des UE, participe à la session de communication à partage de coordonnées.

9. Procédé selon la revendication 1, dans lequel le contenu de média est échangé entre l'UE et ledit au moins un autre UE conjointement avec la session de communication à partage de coordonnées.

10. Procédé selon la revendication 1, dans lequel le contenu de média est obtenu indépendamment au niveau de l'UE et dudit au moins un autre UE de telle sorte que le contenu de média n'est pas échangé entre l'UE et ledit au moins un autre UE conjointement avec la session de communication à partage de coordonnées.

11. Procédé selon la revendication 1,
dans lequel les étapes consistant à recevoir et à transmettre sélectivement se répètent sur une pluralité d'intervalles de temps ;
dans lequel chaque instance de l'étape de réception détermine une seule entrée d'utilisateur représentative d'un seul intervalle de temps, et
dans lequel chaque instance de l'étape consistant à transmettre sélectivement tente de transmettre l'unique entrée d'utilisateur pour un seul intervalle de temps respectif.

12. Procédé selon la revendication 1, dans lequel l'étape consistant à transmettre sélectivement transmet le paquet de coordonnées conjointement avec la transmission d'une poussée de conversation.

13. Procédé selon la revendication 1, comprenant en outre :
détecter un événement asynchrone au niveau de l'UE qui est indépendant de la sélection de ladite au moins une coordonnée,
dans lequel l'étape consistant à transmettre sélectivement transmet le paquet de coordonnées conjointement avec des données asynchrones associées à l'événement asynchrone détecté.

14. Procédé pour actionner un équipement d'utilisateur (UE) qui participe à une session de communication à partage de coordonnées avec au moins un autre UE, qui est arbitrée par un serveur, comprenant :
afficher, sur un afficheur de l'UE, une représentation visuelle donnée de contenu de média associé à la session de communication à partage de coordonnées ;
recevoir une trame de sortie de coordonnées provenant du serveur, qui indique un ensemble de coordonnées sur la base de la représentation visuelle donnée telle qu'affichée au niveau d'un ou plusieurs autres UE, et qui a été sélectionné par l'intermédiaire d'une entrée d'utilisateur au niveau desdits un ou plusieurs autres UE pendant une période de temps donnée dans la session de communication à partage de coordonnées ; et
mettre à jour sélectivement la représentation visuelle donnée pour refléter l'ensemble de coordonnées contenu dans la trame de sortie de coordonnées reçue ;
**caractérisé en ce que** la trame de sortie de coordonnées indique la sélection de ladite au moins une coordonnée en indiquant une position à laquelle la sélection a lu lieu par rapport à la représentation visuelle donnée sur l'afficheur de l'UE.

15. Procédé pour arbitrer une session de communication à partage de coordonnées entre une pluralité d'équipements d'utilisateurs (UE) au niveau d'un serveur, comprenant :
surveiller, pendant une période de réception de coordonnées (CRP), des paquets de coordonnées provenant de la pluralité d'UE, qui indiquent des informations associées à un contenu de média qui est affiché au niveau de chacun de la pluralité d'UE ;
recevoir, à partir d'au moins l'un de la pluralité d'UE, un paquet de coordonnées pendant la CRP qui indique une sélection d'une coordonnée d'une représentation visuelle du contenu de média par une entrée d'utilisateur au niveau dudit au moins un UE ; **caractérisé en ce que** le paquet de coordonnées indique la sélection de ladite au moins une coordonnée en indiquant une position à laquelle la sélection a eu lieu par rapport à la représentation visuelle donnée sur un afficheur dudit au moins un UE ;
formater la coordonnée sélectionnée à partir du paquet de coordonnées reçu en un ensemble de trames de sortie de coordonnées agencé pour indiquer des sélections de coordonnées par la pluralité d'UE pendant la CRP ; et
transmettre l'ensemble de trames de sortie de coordonnées à la pluralité d'UE.

16. Équipement d'utilisateur (UE) agencé pour participer à une session de communication à partage de coordonnées avec au moins un autre UE, qui est arbitrée par un serveur, comprenant (224) :
des moyens pour afficher une représentation visuelle donnée de contenu de média associé à la session de communication à partage de coordonnées ;
des moyens pour recevoir une entrée d'utilisateur qui indique une sélection d'au moins une coordonnée de la représentation visuelle donnée ; et
des moyens (222) pour transmettre sélectivement un paquet de coordonnées indiquant la sélection de ladite au moins une coordonnée au serveur pour une dissémination vers ledit au moins un autre UE ;
**caractérisé en ce que** le paquet de coordonnées indique la sélection de ladite au moins une coordonnée en indiquant une position à laquelle la sélection a eu lieu par rapport à la représentation visuelle donnée sur l'afficheur de l'UE.

17. Équipement d'utilisateur (UE) agencé pour participer à une session de communication à partage de coordonnées avec au moins un autre UE, qui est arbitrée par un serveur, comprenant :
des moyens (224) pour afficher une représentation visuelle donnée de contenu de média associé à la session de communication à partage de coordonnées ;
des moyens pour recevoir une trame de sortie de coordonnées provenant du serveur, qui indique un ensemble de coordonnées sur la base de la représentation visuelle donnée telle qu'affichée au niveau d'un ou plusieurs autres UE, et qui a été sélectionné par l'intermédiaire d'une entrée d'utilisateur au niveau desdits un ou plusieurs autres UE pendant une période de temps donnée dans la session de communication à partage de coordonnées ; et
des moyens pour mettre à jour sélectivement la représentation visuelle donnée pour refléter l'ensemble de coordonnées contenu dans la trame de sortie de coordonnées reçue ;
**caractérisé en ce que** la trame de sortie de coordonnées indique la sélection de ladite au moins une coordonnée en indiquant une position à laquelle la sélection à une lieu par rapport à la représentation visuelle donnée sur l'afficheur de l'UE.

18. Serveur (170) agencé pour arbitrer une session de communication à partage de coordonnées entre une pluralité d'équipements d'utilisateur (UE), comprenant :
des moyens pour surveiller, pendant une période de réception de coordonnées (CRP), des paquets de coordonnées provenant de la pluralité d'UE, qui indiquent des informations associées à un contenu de média qui est affiché au niveau de chacun de la pluralité d'UE;
des moyens pour recevoir, à partir d'au moins l'un de la pluralité d'UE, un paquet de coordonnées pendant la CRP qui indique une sélection d'une coordonnée d'une représentation visuelle du contenu de média par une entrée d'utilisateur au niveau dudit au moins un UE ; **caractérisé en ce que** le paquet de coordonnées indique la sélection de ladite au moins une coordonnée en indiquant une position à laquelle la sélection a eu lieu par rapport à la représentation visuelle donnée sur l'afficheur de l'UE;
des moyens pour formater la coordonnée sélectionnée à partir du paquet de coordonnées reçu en un ensemble de trames de sortie de coordonnées agencé pour indiquer des sélections de coordonnées par la pluralité d'UE pendant la CRP ; et
des moyens pour transmettre l'ensemble de trames de sortie de coordonnées à la pluralité d'UE.

19. Support non transitoire lisible par un ordinateur contenant des instructions mémorisées sur lui qui, lorsqu'elles sont exécutées par un équipement d'utilisateur (UE) agencé pour participer à une session de communication à partage de coordonnées avec au moins un autre UE qui est arbitrée par un serveur, amènent l'UE à réaliser le procédé de l'une quelconque des revendications 1 à 15.
